# EUROPÄISCHE PATENTANMELDUNG

(11) **EP 1 233 246 A2**
(43) Veröffentlichungstag der Anmeldung: **21.08.2002**
(21) Anmeldenummer: 02003366.8
(22) Anmeldetag: 13.02.2002
(51) Int. Cl.: G01B 7/04

(54) **Gehäuse und Montage für magnetische Längenmessvorrichtung**

(30) Priorität: 13.02.2001 DE 10106478; 10.01.2002 DE 20200330 U
(71) Anmelder: ASM AUTOMATION, SENSORIK, MESSTECHNIK GMBH, D-85452 Moosinning (DE)
(72) Erfinder: Steinich, Klaus-Manfred, 85604 Poering-Zorneding (DE); Wirth, Peter, 85386 Eching (DE)
(74) Vertreter: Müller, Gerald Christian

(57) **Zusammenfassung**

Magnetische Längenmessvorrichtungen müssen einfach und kostengünstig in der Herstellung vor allem des Sensorkopfes sein und auf einfache und kostengünstige Weise die Montage des Maßstabes in gut geschützter Form ermöglichen. Dies wird erfindungsgemäß durch die spezielle Gehäuseform und Montageart des Sensorkopfes einerseits sowie die Bauform und Befestigungsart der Profilschiene andererseits erreicht.

## Beschreibung

### I. Anwendungsgebiet

Die Erfindung betrifft eine Messvorrichtung welche einen Kopf umfaßt, die eine Sensoreinheit beinhaltet. Ein typischer Fall einer solchen Meßvorrichtung ist eine Längenmeßvorrichtung.

### II. Technischer Hintergrund

Angeordnet auf dem Umfang eines Zylinders, kann eine solche Längenmessvorrichtung natürlich grundsätzlich auch zur Winkelmessung verwendet werden.

Die Längenmessvorrichtung umfasst einerseits einen Maßstab, auf dem die Längeneinheiten aufgetragen sind, sowie eine Sensoreinheit, die in Messrichtung relativ zum Maßstab bewegt wird. In der Regel wird dabei registriert, wie viele Längeneinheit bei dieser Relativbewegung seitens der Sensoreinheit zurückgelegt, also ganz oder teilweise überlaufen, wurden. Die Absolutposition am Ende der Relativbewegung kann nur unter Kenntnis der Startposition vor der Relativbewegung berechnet werden.

Zu diesem Zweck weist der gerade oder gekrümmte Maßstab nur in einer einzigen Spur oder in mehreren Spuren nebeneinander, in Messrichtung hintereinander jeweils Codierungen, meist gleichmäßige und periodische Codierungen, auf, wobei der Teilungsabstand von Spur zu Spur unterschiedlich ist. Zusätzlich ist entlang der Messstrecke, in der Regel meist nur an einer einzigen Längsposition, eine Referenzmarke vorhanden, deren Position die absolute Nulllage darstellt, und welche somit für eine Inbetriebsetzung der Vorrichtung zunächst einmal überfahren werden muss, um einen absoluten Startwert vorzugeben.

Daneben sind jedoch auch absolut messende Längenmessvorrichtungen bekannt. Dabei ist durch Auslegung der Maßstabseinteilungen und das Auswerteverfahren zum Beispiel durch nur einmaliges Aufsetzen des Sensors an einer beliebigen Stelle des Maßstabes unmittelbar die Absolutlage des Sensors auf dem Maßstab ermittelbar, ohne Relativverfahrung des Sensors gegenüber dem Maßstab und ohne zunächst erforderliches Anfahren eines Referenzpunktes auf dem Maßstab.

Unabhängig davon, ob es sich um ein inkrementales oder um ein absolutes Längenmesssystem handelt, umfasst die erfindungsgemäße Messvorrichtung einen oder mehrere oder eine Vielzahl von Magneten, die die Modulation des zu detektierenden Signales bewirken. Z.B. sind auf dem Maßstab die einzelnen Längeneinheiten in Form unterschiedlicher Magnete bzw. Magnetisierungen in Messrichtung hintereinander aufgetragen, beispielsweise als in Messrichtung jeweils gleich lange abwechselnd gepolte Segmente.

Die relativ dazu in Messrichtung bewegte Sensoreinheit, die neben dem eigentlichen Sensor in der Regel bereits wenigstens Teile der Auswerteelektronik enthält, detektiert das in Messrichtung sich ständig ändernde Magnetfeld als analoges Signal in Form einer Sinusschwingung bzw. einer sinusähnlichen, jedoch gleichmäßigen, Schwingung. Ein wesentlicher Vorteil dieser Methode ist die Tatsache, dass der Sensor im Abstand, also berührungslos, zu dem Maßstab geführt werden kann. Der Maßstab und auch der Sensor unterliegen damit keinem mechanischen Verschleiß. Zusätzlich muss auch die Parallelität der Führung des Sensor zu der Verlaufsrichtung des Maßstabes nur beschränkt gegeben sein. Insbesondere darf sich der Abstand zwischen Sensor und Maßstab, der bei etwa 1,0 mm liegen soll, auch etwas ändern.

Die Elektronik zum Auswerten der Messsignale umfasst einerseits einen Wandler, um das periodische analoge Signal, etwa eine Sinusschwingung, in ein periodisches digitales Signal, beispielsweise ein Rechtecksignal, umzuwandeln.

Dabei muss eine Sinusschwingung nicht unbedingt einem Rechtecksignal entsprechen: da die Form des analogen Signales bekannt ist, kann durch genauere Auswertung des analogen Signales, beispielsweise den momentanen Absolutwert, die Relativposition in Messrichtung innerhalb einer Periode des analogen Signales ermittelt werden. Ein Interpolator, in der Regel in Form einer elektronischen Schaltung, beispielsweise aufgrund der vorbeschriebenen Methode, bewirkt, dass das erhaltene z.B. periodische digitale Signal kleinere Teilungsabstände aufweist als das z.B. periodische analoge Ausgangssignal, also die Auflösung des digitalen Signales wesentlich höher ist. Der Faktor der höheren Auflösung ist dabei am Interpolator einstellbar, und wenn der Interpolator in Form einer programmierbaren Schaltung vorliegt, mittels Umprogrammierung bzw. Neuprogrammierung einstellbar.

Meist ist der Wandler dabei im Interpolator schaltungstechnisch und/oder körperlich integriert.

Ebenso können weitere Parameter, beispielsweise Korrekturfaktoren zur Korrektur der Kennlinien der Elektronik, Korrekturfaktoren zum Einstellen von Nullpunkt und/oder Verstärkung der Elektronik oder einzelner Baugruppen der Elektronik, Korrekturfaktoren zur Einstellung der Lage des Referenzpunktes innerhalb einer Teilung des Maßstabes ebenfalls am Interpolator eingestellt und insbesondere umprogrammiert werden.

Die Elektronik umfaßt auch eine Leitungstreiberschaltung, die wie üblich der Verbesserung der Übertragungsfähigkeit des Ausgabe-Signales dient, beispielsweise durch Verringern der Impedanzen.

Die Elektronik umfaßt weiterhin eine Schutzbeschaltung, die die gesamte Elektronik oder zumindest Teile davon vor zu hohen Spannungen und/oder zu hohen Strömen schützt, wie sie beispielsweise durch falsche Polung an der Ausgabeeinheit auftreten können.

In der Regel weist die Elektronik an ihren peripheren Verbindungen zur Umgebung in den Leiterbahnen innere Knotenpunkte auf, die mit den elektronischen Bauelementen der Elektronik verbunden sind, und äußere Knotenpunkte, die mit dem Anschlußkabel der Ausgabeeinheit, der Stromversorgung und allen weiteren von außen zugänglichen Kontaktpunkten, etwa der Kontaktiereinheit, zum Programmieren des Interpolators, verbunden sind.

Die Schutzbeschaltung befindet sich dabei zwischen den inneren und äußeren Knotenpunkten, und kann im vorliegenden Fall durchaus baulicher Bestandteil des Interpolators und/oder der Leitungstreiberschaltung sein.

Die Schutzbeschaltung bewirkt ein Begrenzen der elektrischen Ströme in den Leitern zu und von der Elektronik sowie ein Ableiten zu hoher Spannungen in diesen Leitern, beispielsweise durch Verwendung strombegrenzender Impedanzen (Ohmsche Widerstände oder frequenzabhängig absorptiv durch Ferritdrosseln, frequenzabhängig reflektiv durch Induktivitäten oder stromabhängig durch PTC-Widerstände oder integriert als stromabhängige Begrenzung in der Ausgangsstufe des Leistungstreibers) und/oder spannungsbegrenzende Bauelemente (z. B. Kaptioden, insbesondere im Leitungstreiber integriert, Ableitdioden, Varistoren).

Die Elektronik umfasst ferner eine Ausgabeeinheit, um dieses digitale und in der Regel hochauflösende, digitale Signal ausgeben zu können, sei es an eine Anzeigeeinheit, zum Beispiel eine Digitalanzeige, oder sei es zur Weiterverarbeitung an eine Maschinensteuerung.

In der Regel ist zu diesem Zweck an der Sensoreinheit ein Kabel fest angeordnet, an dessen Ende ein Stecker als Ausgabeeinheit angeordnet ist.

Um eine solche Messvorrichtung möglichst vielseitig an unterschiedlichsten Maschinen und Anlagen verwenden zu können, ist neben einer möglichst hohen Unempfindlichkeit gegenüber physikalischen und chemischen Einflussfaktoren auch eine möglichst geringe bauliche Abmessung sowohl des Maßstabes als auch der Sensoreinheit anzustreben.

Der Maßstab besteht dabei in der Regel aus einem Magnetband von 1 - 2 mm Dicke und ca. 1 cm Breite, welches flexibel ist und mittels selbstklebender Beschichtung oder Doppelklebeband direkt auf einer Maschine, aber auch auf einer eine ausreichende Ebenheit ermöglichenden Profilschiene aufgeklebt wird und als mechanischem Schutz mit einem Edelstahlblech, welches nicht magnetisierbar ist, abgedeckt ist.

Bei der Sensoreinheit kommt es vor allem auf geringe Baugröße an. Insbesondere sollte die Sensoreinheit nicht breiter sein als der Maßstab. Auch sollte die Sensoreinheit in Messrichtung nicht unbegrenzt über die Position des - in Messrichtung meist sehr kurzen, nur einige Millimeter langen eigentlichen Sensors - hinausragen, da dieser Überstand ja eine Überlänge des Maßstabes über die zu messende Strecke hinaus bedingt.

Dagegen ist die Ausdehnung der Sensoreinheit in Richtung lotrecht zur Ebene des Maßstabes hinaus weniger kritisch.

Dabei ist es üblich, die in der beweglichen Sensoreinheit angeordneten Teile, insbesondere die dort angeordneten Teile der Elektronik, durch ein umgebendes festes Gehäuse und/oder Eingießen in Kunststoff zu schützen.

Sofern der Faktor, um den das digitale Signal eine höhere Auflösung aufwies als das zugrundeliegende analoge Signal, also die Teilung des Maßstabes, nachträglich einstellbar, beispielsweise mittels Programmierung einstellbar, sein sollte, was insbesondere bei Verwendung ein- und derselben Längenmessvorrichtung für unterschiedliche Anwendungszwecke notwendig ist, war der entsprechende Interpolator bisher nicht innerhalb der beweglichen Sensoreinheit untergebracht, sondern als separate Baugruppe entfernt von der Sensoreinheit, so dass die von der Sensoreinheit erhaltenen Signale mittels Kabel und Stecker in diesem separaten Interpolator umgerechnet wurden.

### III. Darstellung der Erfindung

### a) Technische Aufgabe

Ausgehend von dieser Situation bestand die Aufgabe gemäß der Erfindung darin, eine Messvorrichtung zu schaffen, die klein und kompakt und dennoch betriebssicher aufgebaut ist, und bei der insbesondere der Kopf mit der Sensoreinheit sehr robust sein soll.

### b) Lösung der Aufgabe

Diese Aufgabe wird durch die Merkmale der Ansprüche 1 sowie 11 bis 15 gelöst. Vorteilhafte Ausführungsformen ergeben sich aus den Unteransprüchen.

Durch das Verschließen der Meßseite, also z. B. der dem Maßstab zugewandten Frontfläche des Kopfes mit der Sensoreinheit durch eine Frontplatte ist die Sensoreinheit wesentlich unempfindlicher gegenüber Umwelteinflüssen. Selbst wenn das Innere der Sensoreinheit, also die dort untergebrachte Elektronik, durch Ausgießen des Inneren der Sensoreinheit mit Kunststoff geschützt ist, so ist die dadurch entstehende Frontfläche aus Kunststoff immer noch relativ empfindlich. Zwar berührt im normalen Betrieb die Sensoreinheit und damit auch diese Frontfläche den Maßstab nicht, jedoch können mechanische Kontakte bei unerwünschten Berührungen des Maßstabes erfolgen und vor allem auch dann, wenn Verschmutzungen zwischen Sensoreinheit und Maßstab gelangen, beispielsweise Metall-Späne von der spanenden Bearbeitung, falls die Längenmeßvorrichtung an einer Werkzeugmaschine eingesetzt wird. Durch solche Einflüsse kann ein hartes Teil in den relativ weichen Kunststoff der Frontfläche eindringen und dort Beschädigungen verursachen, was durch eine Frontplatte mit wesentlich höherer Härte vermieden werden kann.

Dazu reicht es unter Umständen aus, diese Frontplatte, die in der Regel aus Metall, jedoch nicht magnetischem Metall, wie etwa Edelstahl (Stahllegierungen mit hohem Nickel- und/oder Chromanteil, insbesondere größer als 10 Gew.-%), Aluminium oder Titan besteht, relativ dünn auszubilden.

Vorzugsweise wird eine solche Frontplatte stumpf auf die Stirnfläche des übrigen Korpus der Sensoreinheit aufgebracht, und der Korpus dadurch dicht verschlossen.

Da dies vorzugsweise vor dem Vergießen der Elektronik in dem Gehäuse des Sensoreinheit erfolgt, muss auch keine separate Abdichtung für das Vergießen mehr vorgenommen werden.

In einer bevorzugten Ausführungsform wird - vor allem bei Benutzung eines magnetoresistiven Sensors - somit eine dünne Metallfolie von 10 bis 50 µm Dicke vorzugsweise durch Verschweißen als Schweißverfahren stehen alle Arten des Elektronenstrahlschweißen bzw. Lichtbogenschweißens, insbesondere das Wick-, Mick-, Mack-Schweißen, das Laserschweißen, Ultraschallschweißen und Plasmaschweißen zur Verfügung, wobei vorzugsweise die Frontplatte stumpf auf die Stirnfläche des Korpus aufgelegt wird von der Außenumfangsfläche her dicht mit dem übrigen Korpus verbunden. Für ein Verschweißen müssen die beiden beteiligten Materialien, also Korpus und Frontplatte, nicht unbedingt aus dem gleichen Material bestehen, jedoch müssen - bei metallischen Werkstoffen - die beiden Metalle miteinander legierbar sein, um miteinander verschweißt werden zu können. Insbesondere beim Elektronenstrahlschweißen bzw. Lichtbogenschweißen besteht dabei auch die Möglichkeit, über die abbrennende Elektrode einen Zusatzwerkstoff einen Zusatzwerkstoff in die Schweißnaht einzubringen, der unter Umständen erst die Schweißbarkeit der Materialien von Korpus und Frontplatte gegeneinander ermöglicht.

Dadurch, daß der Kopf der Sensoreinheit ein Gehäuse umfaßt, welches in wenigstens einer Richtung einen gleichbleibenden Querschnitt aufweist, bereitet das Kürzen des Gehäuses in dieser Verlaufsrichtung keine Probleme.

Dies ermöglicht es, in dieser Verlaufsrichtung unterschiedlich lange Gehäuse herzustellen, beispielsweise je nach Fortschritt der Miniaturisierung der darin unterzubringenden Elektronik oder auch je nach Menge der Funktionen, und damit der körperlichen Baugröße dieser Elektronik.

Insbesondere ist die Verlaufsrichtung, in der das Gehäuse einen gleichbleibenden Querschnitt aufweist die lotrechte Richtung, also diejenige Richtung, die quer, insbesondere lotrecht, zu der Frontfläche des Kopfes verläuft, nahe der sich im Kopf der Sensoreinheit der eigentliche, wenigstens eine Sensor befindet, und damit auch lotrecht zu der Ebene des Maßstabes, die durch die Meßrichtung, also die Längsrichtung einerseits und die hierzu verlaufende Querrichtung in der Ebene des Maßstabes andererseits, definiert ist.

Insbesondere besitzt das Gehäuse über seine gesamte Längserstreckung einen solchen gleichbleibenden Querschnitt, ggf. abgesehen von Aussparungen wie etwa Bohrungen oder anderen Durchbrüchen, die diesen Querschnitt an einigen Stellen zusätzlich durchbrechen. Der Querschnitt besitzt jedoch an keinem Punkt der Längserstrekkung über den üblichen Querschnitt vorstehende Vorsprünge, so daß der Korpus dieses Gehäuses mit einem wirtschaftlichen Verfahren herstellbar ist, nämlich einerseits als Stangpreßprofil, von dem die gewünschte Länge lediglich abgeschnitten werden muß, oder auch als mittels Tiefziehen hergestelltes topfförmiges Gehäuse, bei dem dann der Boden des Topfes als Rückseite des Korpus verwendet wird.

Als dem Maßstab zugewandte Frontseite wird immer eine der offenen Seiten des Korpus des Gehäuses verwendet, also bei der Herstellung aus einem Strangpreßprofil eine der offenen Stirnseiten.

Das Innere des Korpus wird nach dem Unterbringen der Elektronik darin wenigstens über einen Teil des Innenraumes, beginnend von der Frontfläche aus, vergossen, wie später noch beschrieben wird. Dabei kann auch ein Verguß bis zur Rückseite hin erfolgen, in der Regel wird jedoch diese Rückseite - gegebenenfalls zusätzlich - durch einen Deckel verschlossen. Dieser Deckel selbst kann wiederum ein Abschnitt eines anderen Strangpreßprofiles, des Deckel-Profiles, sein.

Der Profilquerschnitt des Korpus ist vorzugsweise zu den beiden Längsmittellinien in Meßrichtung und in Querrichtung symmetrisch ausgebildet. Auf den Innenseiten der in und gegen die Meßrichtung, also die Längsrichtung, weisenden Stirnwände sind dabei einander gegenüberliegend Platinennuten, vorzugsweise zwei Paare von Platinennuten jeweils nahe an den Seitenwänden liegend, angeordnet, so daß in diese Nuten Platinen mit darauf aufgebrachter Elektronik eingeschoben werden können. Insbesondere so, daß die Bestückung dieser Platinen auf der von der benachbarten Seitenwand des Korpus abgewandten Seite untergebracht ist, also die Bestückungen zweier einander gegenüberliegender Platinen im Zwischenraum zwischen den Platinen positioniert sind, und dadurch besonders effektiv, besonders durch nachfolgenden Verguß, vor Umwelteinflüssen und mechanischen Beschädigungen beschützt werden.

Zusätzlich, vorzugsweise auf der Längsmitte, sind an diesen Stirnwänden wiederum einander gegenüberliegend Schraubnuten mit einem hinterschnittenen Querschnitt vorhanden. Diese Schraubnuten weisen im hinterschnittenen Bereich vorzugsweise einen runden Querschnitt auf, und dienen zum Einschrauben von Schrauben in Längsrichtung der Nuten vom stirnseitigen offenen Ende des Profiles her, beispielsweise zum Befestigen des Deckels. Wenn jedoch der kleinste freie Querschnitt dieser Schraubnuten wenigstens der Dicke der Platinen, also etwa der Breite der Platinennuten, entspricht, kann in dieses Paar von einander gegenüberliegenden Schraubnuten ebenfalls eine Platine eingeschoben werden, und zusätzlich - in einem anderen Längenbereich - eine Verschraubung in diesen Schraubnuten vorgenommen werden.

Der auf diese Art und Weise auf die Rückseite des Korpus aufzuschraubende Deckel kann eine einfache ebene Platte sein, die auf der rückwärtigen Stirnfläche des Korpus-Profiles aufliegt und verschraubt wird, oder der Deckel kann von der Rückseite her zwischen die Seitenwände eintauchen, was ein teilweises Entfernen z. B. mittels Abfräsen der Stirnwände des Korpusgehäuses erfordert.

Sofern der Deckel aus Abschnitten eines stranggepreßten Deckelprofiles mittels Ablängen hergestellt ist, besteht dieses Deckelprofil vorzugsweise aus einer Rückenplatte, sowie hiervon abstehendem Fortsatz, der mit zum Profilquerschnitt gehört und sich damit über die gesamte Länge des Deckelprofiles erstreckt. Der Profilabschnitt wird als Deckel so verwendet, daß die Verlaufsrichtung des Deckelprofiles die Querrichtung ist und der Fortsatz von der Rückenplatte aus in den Korpus hineinragt.

In dem Fortsatz sind eine oder mehrere, in Längsrichtung, der Meßrichtung, beabstandete Durchgangsöffnungen, ggf. auch in Form einer hinterschnittenen Nut, angeordnet. Positioniert zu dieser einen oder vorzugsweise zwei bezüglich der Mitte in Längsrichtung symmetrisch angeordneten Querbohrung sind auch in den Seitenwänden des Korpus nahe der Rückseite analoge Bohrungen angeordnet, so daß nach Einsetzen des Deckels eine Verschraubung durch Korpus und Deckel hindurch als Verbindung benutzt werden kann, und ggf. gleichzeitig zur Befestigung des Sensorkopfes an einem diesen tragenden Bauteil dient, meist einem Maschinenelement, dessen Bewegung überwacht und gemessen werden soll.

Die Durchgangsbohrungen können jeweils in einem separaten Fortsatz oder in einem gemeinsamen, entsprechend groß dimensionierten Fortsatz angeordnet sein. Der Fortsatz muß auf jeden Fall in Längsrichtung eine größere Erstreckung aufweisen als für diese Querbohrungen benötigt, wenn zusätzlich zu den Querbohrungen im Deckel ein von außen zugängliches Befestigungsgewinde, welches quer zur Ebene der Rückenplatte des Deckels und damit in der Lotrechten des Korpus, verläuft, angeordnet werden soll. Dieses eine oder auch zwei Befestigungsgewinde ist vorzugsweise als Sackloch-Gewinde ausgebildet und wird vorzugsweise nachträglich in dem abgelängten Strangpreßprofil angebracht.

Mittels dieser Befestigungsbohrung ist eine Verschraubung des Kopfes des Sensors über dessen Deckel an einem tragenden Bauteil möglich. Wegen der Befestigung an einem aufnehmenden Bauteil ist sowohl die Rückseite, also die Außenseite des Dekkels, als auch die Seitenwände des Korpus außen plan ausgebildet.

Das Kabel wird vorzugsweise über eine der Stirnflächen in den Korpus hineingeführt. Zu diesem Zweck durchläuft das Kabel eine Kabeltülle aus Kunststoff oder anderem, eine Reibung des Kabels an dem metallenem Korpus verhindernden, Material. Für die Aufnahme des Kabels mit der Tülle ist eine der Stirnwände von der Rückseite her teilweise entfernt, so daß die Tülle - vorzugsweise wie bekannt - mittels zweier gegenüberliegender, nach außen offener Nuten - auf die freien Enden der ausgefrästen Stirnwand aufgeschoben werden kann.

Anstatt konventionell die Kabeltülle über das Kabel zu schieben, und dann erst die Kabeltülle - in der Regel nach Befestigen der freien Aderenden des Kabels an den Leiterplatten der Elektronik - in die Ausnehmung des Korpus für die Tülle zu schieben, kann die Tülle an der entsprechenden Position des Kabels auch angespritzt werden aus einem thermoplastischen Kunststoff, insbesondere einem Heißkleber, in dem das Kabel in einer entsprechenden Form positioniert und die Kabeltülle direkt ans Kabel angespritzt wird.

Auf die gleiche Art und Weise kann die Kabeltülle über ein elastisches Scharnier mit dem Deckel verbunden werden, so daß nach Lösen der Deckelverschraubung der Deckel nicht verlorengehen kann. Insbesondere kann der Deckel selbst zusammen mit der Kabeltülle als einstückiges Kunststoffteil hergestellt und auch wie vorbeschrieben mittels Spritzen direkt an der entsprechenden Position des Kabels angespritzt werden.

Sofern der Deckel keine Querbohrungen besitzt, kann durch die in den Seitenwänden angeordneten Querbohrungen des Korpus jeweils eine Querhülse durchgeschoben werden, die zum Hindurchstecken einer Verschraubung dient, gleichzeitig jedoch das Innere des Sensorgehäuses gegenüber der Umgebung abdichtet. Die Querhülsen können verschraubt, verklebt oder verklemmt in den Querbohrungen des Korpus sein.

Das Verschließen der Rückseite des Korpus mittels eines Deckels, insbesondere eines entfernbaren, also mittels Verschraubung oder Verrastung oder Verklemmung befestigten, Deckels, ist sinnvoll, um durch Abnehmen des Deckels ins Inneren des Kopfes der Sensoreinheit gelangen zu können. Dort ist die Elektronik - in der Regel einschließlich der eigentlichen Sensoren - auf einer oder in der Regel zwei starren Platinen untergebracht. Dies sind in die Platinennuten des Korpus eingeschoben und reichen bis nahe bzw. unmittelbar an die Frontfläche des Sensorkopfes heran und anschließend sind sie soweit vergossen, daß der rückwärtige, zur Rückseite benachbart liegende, Innenraum des Korpus noch frei bleibt und daraus auch die Kontaktpunkte einer Kontaktiereinheit, meist ausgebildet aus dem nach hinten ausgebildeten Fortsatz einer der Platinen, noch zugänglich sind und durch Anlegen einer Programmiereinheit an diese Kontaktpunkte die Elektronik programmiert werden kann, insbesondere hinsichtlich programmierbarer Parameter wie Auflösung, Kennlinienkorrektur der magnetischen Kennlinien des periodischen analogen Signales, Nullpunkt- und Verstärkungskorrektur, Lage der Referenzmarke innerhalb einer Maßstabsperiode, also eines Segmentes. Sofern dieser hintere, nach dem ersten Vergießen verbleibende, Freiraum mit den Kontaktpunkten für die Kontaktiereinheit nach dem Programmieren ebenfalls vergossen wird, ist ein aufsetzbarer und entfernbarer Deckel auf der Rückseite des Korpus nicht unbedingt notwendig, und kann zugunsten des Vergießens bis zur Rückseite unter Einschluß der Kontaktiereinheit eingespart werden.

Zur weiteren Verkleinerung des Sensorkopfes trägt es bei, wenn möglichst viele der elektronischen Bauelemente auf der oder den Platinen, die dort als integrierter Schaltkreise, also als Chip verwendet sind, als ungehäuster, nackter Chip auf der Platine befestigt und anschließend mittels Vergießen gesichert wird. Da die ungehäuste nackte Bauform weniger als 1/10tel, teilweise weniger als ein 1/20tel der Grundfläche und des Volumens eines gehäusten Chips benötigt, wird durch Verwendung ungehäuster Chips vor allem für die in der Regel mindestens zwei Sensoren sowie den Wandler und den Interpolator die Baugröße der Elektronik soweit verkleinert, daß gegenüber der Verwendung gehäuster Chips die Erstreckung des Korpusgehäuses in Verlaufsrichtung, also in der Lotrechten zur Stirnfläche, gegenüber der Verwendung von gehäusten Chips nochmals um die Hälfte verringert werden kann und dann u. U. geringer als 2 cm ist, und damit insbesondere geringer als das Doppelte der Breite des Maßstabes.

Gerade beim Vergießen einer Elektronik mit ungehäusten Chips, aber auch bei der Verwendung gehäuster Chips, ist darauf zu achten, daß die Komponenten der Elektronik vollständig von der Vergußmasse, in der Regel ein Epoxydharz, welches insbesondere 70 % - 80 % Quarzmehl enthält, umschlossen sind. Vollständig ist so zu verstehen, daß wegen der elektrisch leitenden Verbindung dieser Bauelemente zu den Leiterbahnen der Platine nie eine 100 %-ige Umschließung möglich ist, da die Umhüllung des einzelnen Bauelements durch Vergußmasse von dieser elektrisch leitenden Verbindung nach außen, also zur Platine hin, durchdrungen werden muß.

Eine Möglichkeit besteht auch darin, die Elektronik zu vergießen und dabei die Außenflächen des ausgehärteten Vergusses gleichzeitig als Außenfläche des Kopfes zu benutzen, so daß also der Verguß nicht in einem Gehäuse erfolgt, welches Bestandteil des Kopfes ist, sondern in einer entfernbaren und wiederverwendbaren Form.

Hinsichtlich der Dimensionierung des Kopfes der Sensoreinheit soll die Breite des Kopfes nicht größer als das 1,5-fache der Breite des Maßstabes sein, insbesondere nicht breiter als der Maßstab, insbesondere weniger breit als der Maßstab.

Dagegen kann die Erstreckung des Kopfes in Längsrichtung, der Meßrichtung, größer sein, jedoch insbesondere nicht größer als das 70-fache, insbesondere nicht größer als die 50-fache Erstreckung eines der unterschiedlich magnetisierten Segmente des Maßstabes.

Die Erstreckung des Kopfes in der Lotrechten sollte vorzugsweise geringer sein als die Erstreckung in Meßrichtung, da zunehmende Erstreckungen in der Lotrechten zunehmenden Freiraum, und zwar über die ganze Länge der Meßvorrichtung, oberhalb des Maßstabes, erfordert. Die Vorgehensweise bei der Herstellung des Kopfes der Sensoreinheit, die zu einer einfachen und damit kostengünstigen Herstellung führt, besteht somit aus folgenden Schritten:
a) Elektrisch leitendes Verbinden der Adern des von dem Kopf wegführenden Kabels mit den Kontaktpunkten der Schaltung auf den Platinen der Elektronik, wobei dieses Verbinden vorzugsweise vor dem Einbringen der Platinen und auch der Adern in die Endposition des Kopfes erfolgt,
b) Anordnen der Kabeltülle auf dem Kabel, also Überschieben einer vorgefertigten Tülle oder Anspritzen einer Tülle am Außenumfang des Kabelmantels,
c) Einschieben der Platine in die Nuten, insbesondere die Platiennuten und/oder die Schraubnuten, des Korpusprofiles sowie Einschieben der Kabeltülle mit dem Kabel von der Rückseite des Korpus her in die entsprechende Tüllenausnehmung, wobei vorzugsweise beides zusammen von der Rückseite her geschieht,
d) dichtes Aufsetzen des Korpus mit seiner ebenen Frontfläche auf einen ebenen, abdichtenden Untergrund und anschließendes Vergießen des Inneren des Korpus bis zu einer solchen Höhe, daß die festen Platinen einschließlich der sie verbindenden flexiblen Platine vollständig von der Vergußmasse bedeckt sind und nur die Kontaktiereinheit, also die Kontaktpunkte auf dem über die sonstige Kante der Platinen vorstehenden Fortsatz einer der Platinen zur späteren Programmierung noch zugänglich sind,
e) nach dem Aushärten Abheben des Korpus vom abdichtenden Untergrund.
   Eine alternative Vorgehensweise ist
f) Elektrisch leitendes Verbinden der Adern des von dem Kopf wegführenden Kabels mit den Kontaktpunkten der Schaltung auf den Platinen der Elektronik, wobei dieses Verbinden vorzugsweise vor dem Einbringen der Platinen und auch der Adern in die Endposition des Kopfes erfolgt,
g) Anordnen der Kabeltülle auf dem Kabel, also Überschieben einer vorgefertigten Tülle oder Anspritzen einer Tülle am Außenumfang des Kabelmantels,
c) Dichtes Verbinden, insbesondere Verschweißen, insbesondere mittels Laser, der Frontplatte mit dem Frontende des Korpusprofiles,
d) Einschieben der Platine in die Nuten, insbesondere die Platiennuten und/oder die Schraubnuten, des Korpusprofiles sowie Einschieben der Kabeltülle mit dem Kabel von der Rückseite des Korpus her in die entsprechende Tüllenausnehmung, wobei vorzugsweise beides zusammen von der Rückseite her geschieht,
e) Vergießen des Inneren des Korpus bis zu einer solchen Höhe, daß die festen Platinen einschließlich der sie verbindenden flexiblen Platine vollständig von der Vergußmasse bedeckt sind und nur die Kontaktiereinheit, also die Kontaktpunkte auf dem über die sonstige Kante der Platinen vorstehenden Fortsatz einer der Platinen zur späteren Programmierung noch zugänglich sind,

Anschließend kann entweder der (entfernbare) Deckel auf die Rückseite des Korpus aufgesetzt und später für die Programmierung nochmals abgenommen werden. Eine andere Möglichkeit besteht darin, in dieser offenen Form den Sensor auf Lager zu halten, und erst wenn der Anwendungsfall bekannt ist, die endgültige Programmierung durch Verbinden einer Programmiereinheit mit der Kontaktiereinheit im Inneren des Korpus durchzuführen, und anschließend den restlichen Freiraum in dem rückwärtigen Teil des Korpus ebenfalls komplett zu vergießen.

Gegebenenfalls muß vor Beginn der Montage der Korpus hinsichtlich seiner Längserstreckung, insbesondere in der Lotrechten, also der Verlaufsrichtung des Korpusprofiles, auf das gewünschte Maß abgelenkt bzw. gekürzt werden. Wenn an der Rückseite Ausfräsungen, z. B. für die Aufnahme des Deckels oder der Kabeltülle bereits vorhanden sind, muß die entsprechende Kürzung von der Frontfläche her vorgenommen werden.

Im Betrieb der Meßvorrichtung wird der Kopf der Sensoreinheit mit geringem Luftspalt, also berührungslos, über dem Maßstab in Längsrichtung entlang bewegt. Dabei soll der Abstand, also der Luftspalt, einen Maximalwert nicht überschreiten, und auch die seitliche Abweichung darf nur so weit gehen, daß sich der jeweilige Sensor der Sensoreinheit noch innerhalb der Breite derjenigen Spur des Maßstabes befindet, die er abtasten soll.

Der Maßstab selbst besteht aus einem in der Regel bedingt flexiblen, ca. 1 mm dicken und 1 cm breiten Streifen, welcher wenigstens teilweise aus den unterschiedlich magnetisierten Segmenten besteht. Dieses Magnetband kann auf der Oberseite mit einer Abdeckung, beispielsweise aus Edelstahl-Blech, oder anderen nicht magnetisierbarem Material, geschützt werden.

Der Maßstab 1 kann direkt auf einer Maschine oder ähnlichem aufgebracht werden mittels Aufkleben mit einem doppelseitigem Klebeband. Sofern der dafür zur Verfügung stehende Untergrund nicht ausreichend plan ist, kann das Aufkleben mittels einer ausgleichenden Kleberschicht, beispielsweise eines Doppelklebebandes auf Schaumstoffbasis, von ca. 0,5 mm bis 1 mm Dicke oder einer entsprechend dicken pastösen Kleberschicht vollzogen werden.

Ferner kann der Maßstab zunächst auf einer Profilschiene aufgeklebt werden und diese in sich starre und verwindungssteife Profilschiene dann erst auf dem eigentlich tragenden Bauteil, wie etwa einem Maschinenteil, fixiert werden.

Die entsprechende Profilschiene ist vorzugsweise wiederum als kostengünstiges Stangpreßprofil, beispielsweise aus Aluminium, hergestellt.

Die Profilform dieser Profilschiene ist vorzugsweise symmetrisch zur Längsmitte und weist eine mittige Basisfläche auf, auf welcher der Maßstab aufgebracht, insbesondere aufgeklebt, wird. Diese optimal ebene Basisfläche ist nicht oder nur kaum breiter als der Maßstab selbst und weist beidseits Aufwölbungen auf, deren Höhe gleich oder höher als die Dicke des Maßstabes ist. Vorzugsweise werden damit die oberen Enden der Aufwölbung geringfügig höher positioniert als die Oberseite des Maßstabes, so daß ein aus irgendwelchen Gründen auf den Maßstab aufsitzender Sensorkopf statt auf dem Maßstab nur auf den Aufwölbungen aufsitzt, so daß eine zusätzliche Abdeckung aus Edelstahlblech verzichtbar wird.

Zusätzlich ragen Vorsprünge von seitlich außen in Richtung auf die Längsmitte der Profilschiene vor, enden jedoch außerhalb des Breitenbereichs der Aufwölbungen und auch oberhalb deren maximaler Höhe und dienen der seitlichen Führung des Sensorkopfes.

In der Regel wird der Kopf der Sensoreinheit dabei mittels des ihn tragenden Bauteiles der zu überwachenden Maschine knapp über dem Maßstab und insbesondere zwischen den gegeneinander weisenden Vorsprüngen geführt, wobei die Profilform der Profilschiene und insbesondere deren Vorsprünge nicht zur Führung des Kopfes, sondern nur zu deren Grobpositionierung dienen.

Sofern eine Feinpositionierung mittels der Profilschiene gewünscht ist, wird die Sensoreinheit auf einem Schlitten befestigt, der formschlüssig an der Profilschiene in Längsrichtung geführt ist und von dieser in allen anderen Richtungen formschlüssig positioniert wird.

Vorzugsweise besteht ein solcher Schlitten aus miteinander verschraubtem Unterteil und Oberteil, wobei nur das Unterteil von der Profilschiene formschlüssig geführt wird.

Das Unterteil wird dabei entweder in den Führungsnuten, die zwischen Vorsprung und Aufwölbung jeder Seite gebildet wird, geführt oder in einer separaten Führungsnut, die dadurch gebildet wird, daß die frei von der Seite nach innen ragenden Enden der Vorsprünge gabelförmig ausgebildet sind mit einem dazwischen ausgeformten, zur Mitte hin weisenden Führungsnut.

Die Profilschiene weist an ihrer Unterseite vorzugsweise zwei linienförmige oder bandförmige ebene Unterflächen auf, mit denen sie auf dem Untergrund aufgelegt und befestigt wird. Zu diesem Zweck weist die Profilschiene seitlich außen eine nach oben gerichtete Schulter zum Ansetzen von Halteklammern auf. Diese kann in eine senkrechte Schulter übergehen, die dann der seitlichen Anlage und damit Positionierung in Querrichtung der Profilschiene dient.

Dies kann von Vorteil sein, wenn mehrere Abschnitte einer Profilschiene zwecks Verlängerung hintereinander in Meßrichtung aneinandergesetzt und fluchtend angeordnet werden müssen:

Vorzugsweise besitzt das Profil der Profilschiene, insbesondere beidseits und insbesondere tiefergelegen als die Basisfläche - nach oben, insbesondere in dem Zwischenraum zwischen den Fortsätzen und den Aufwölbungen hinein, offene Nuten, die insbesondere hinterschnitten als Schraubnuten ausgebildet sind und zum stirnseitigen Einstecken von Paßstiften zum Ansetzen einer nächsten Profilschiene dienen. Ebenso können jedoch auch die seitlichen, nach oben und nach außen gerichteten Schultern zum fluchtenden Ausrichten zweier aneinandergrenzender Profilschinen dienen.

Ansonsten dienen die nach oben gerichteten Schultern dem Ansetzen von Halteklammern, die außerhalb des Bereichs der Profilschienen an beliebiger Stelle gegenüber dem Untergrund oder einem tragenden Element verschraubt werden, und mit einem frei endenden Schenkel gegen die Schulter von oben her drücken und damit die Profilschiene fest kraftschlüssig am Untergrund halten.

Statt einzelne Klammern von beiden Seiten anzusetzen, kann auch eine einzige, U-förmige, unter dem Profil der Schiene mit dem verbindenden Schenkel durchlaufende, Halteklammer verwendet werden, was jedoch das Vorhandensein von Befestigungsbohrungen am aufnehmenden Bauteil gleichen Längsposition beidseits der Profilschiene erfordert. Mittels der Halteklammern ist ein sehr schnelles Wechseln der Profilschiene gegen eine andere, höhere oder flachere, Profilschiene oder gegen einen völlig anderen Maßstab möglich.

### c) Ausführungsbeispiele

Ausführungsformen gemäß der Erfindung sind im folgenden beispielhaft näher beschrieben. Es zeigen:
- Fig. 1:: eine perspektivische Prinzipdarstellung von Sensoreinheit und Maßstab,
- Fig. 2:: eine Darstellung der Anordnung der Fig. 1 in Blickrichtung II,
- Fig. 3a:: einen Längsschnitt durch einen Kopf der Sensoreinheit,
- Fig. 3b:: eine Aufsicht auf den Kopf gemäß Fig. 3a,
- Fig. 3c:: eine stirnseitige Ansicht des Kopfes gemäß Fig. 3a,
- Fig. 4:: einen teilweisen Querschnitt durch den Kopf der Fig. 3a,
- Fig. 5:: Ansichten des fertig bearbeiteten Korpus,
- Fig. 6a:: einen Längsschnitt einer anderen Bauform des Kopfes analog zu Fig. 3a,
- Fig. 6b:: eine Aufsicht auf den Kopf der Fig. 6a,
- Fig. 7:: eine Profilschiene für den Maßstab, verschraubt gegenüber dem Untergrund,
- Fig. 8:: die gleiche Profilschiene, jedoch mit anderen Klammern auf dem Untergrund verschraubt,
- Fig. 9:: eine Prinzipdarstellung der Komponenten der Meßvorrichtung, und
- Figuren 10:: eine perspektivische Darstellung einer anderen Bauform der Profilschiene, mit Schlitten und Sensor-Kopf.

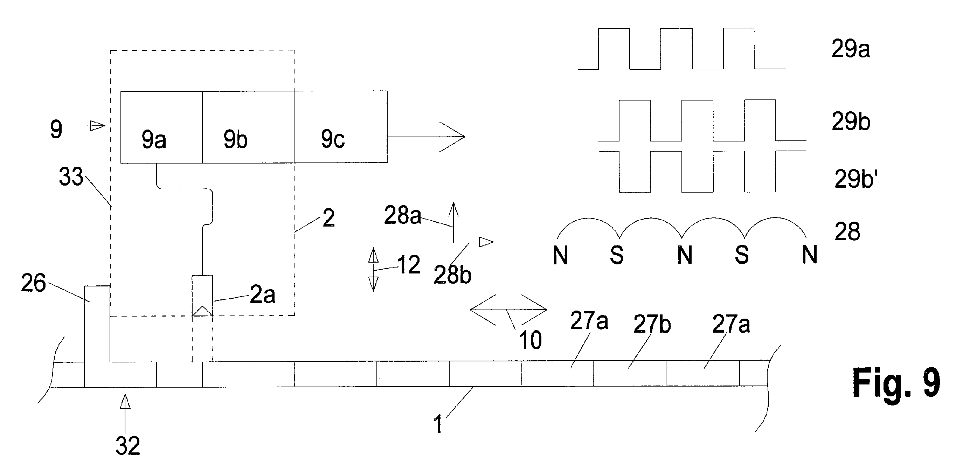

Wie aus Fig. 9 ersichtlich, besteht die Längenmeßvorrichtung einerseits aus dem Maßstab 1 beweglichen Sensor 2a sowie einer Auswerte-Elektronik 9, da der Sensor 2a beim Darübergleiten in Meßrichtung 10 die in dieser Meßrichtung 10 aufeinander periodisch abfolgenden, unterschiedlich magnetisierten, beispielsweise abwechselnd als Nord- und Südpol magnetisierten, insbesondere gleich langen Segmenten 27a, 27b als analoges, sinusförmiges Signal 28 oder insbesondere als nur aus positiven Sinushalbschwingungen bestehendes sinusähnliches analoges Signal detektiert, umfaßt die Elektronik einerseits einen Wandler 9a zum Umsetzen dieses periodischen analogen Signals in ein periodisches digitales Signal.

Die Elektronik umfaßt ferner einen Interpolator 9b, der auch mit dem Wandler 9a zusammen in einer Baugruppe und als eine einheitliche Schaltung ausgeführt sein kann, und welcher bewirkt, daß das periodische digitale Signal eine höhere Auflösung besitzt als das zugrunde liegende periodische analoge Signal, also die Periodenabstände des digitalen Signals insbesondere um ein Mehrfaches, insbesondere um mehr als den Faktor 10, insbesondere um mehr als den Faktor 100, geringer sind als die Periodenabstände des analogen Signales.

Dabei soll der Faktor, um den der Interpolator die Auflösung verbessert, einstellbar sein.

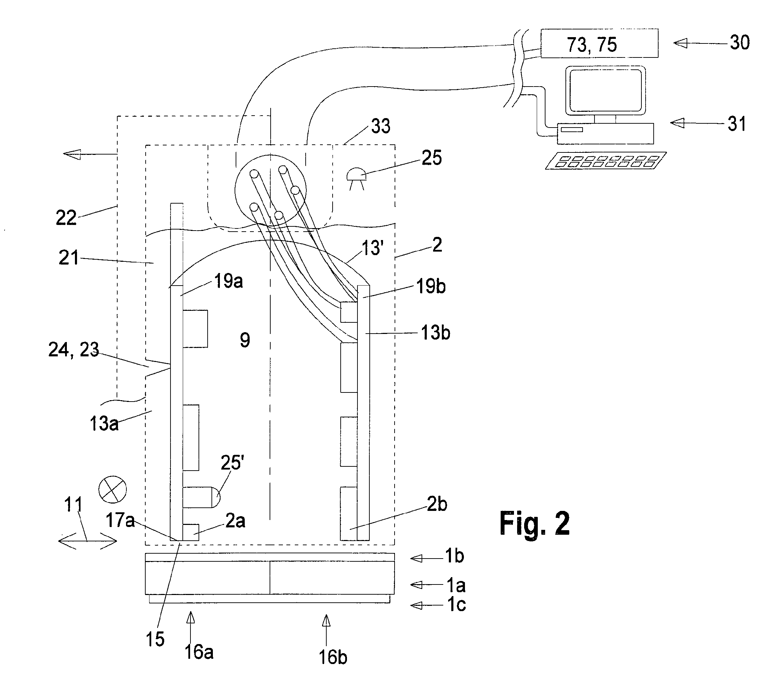

Die Elektronik umfaßt ferner eine Ausgabeeinheit 9c, um das digitale Signal weiterleiten zu können, sei es an eine Anzeigeeinheit, beispielsweise eine Digitalanzeige 30, wie in Fig. 2 dargestellt, oder an eine Weiterverarbeitungseinheit, beispielsweise eine Maschinensteuerung oder einen Computer 31, wie ebenfalls in Fig. 2 angedeutet.

In Fig. 9 ist ferner dargestellt, daß zumindest der Wandler 9a und der Interpolator 9b der Elektronik 9 zusammen mit dem Sensor 2a innerhalb einer Baueinheit, der Sensoreinheit 2, welche in Meßrichtung 10 relativ zum Maßstab 1 beweglich ist, untergebracht sind.

Die Ausgabeeinheit 9c ist meist als Stecker am Ende eines von der Sensoreinheit 2 wegführenden Kabels ausgebildet.

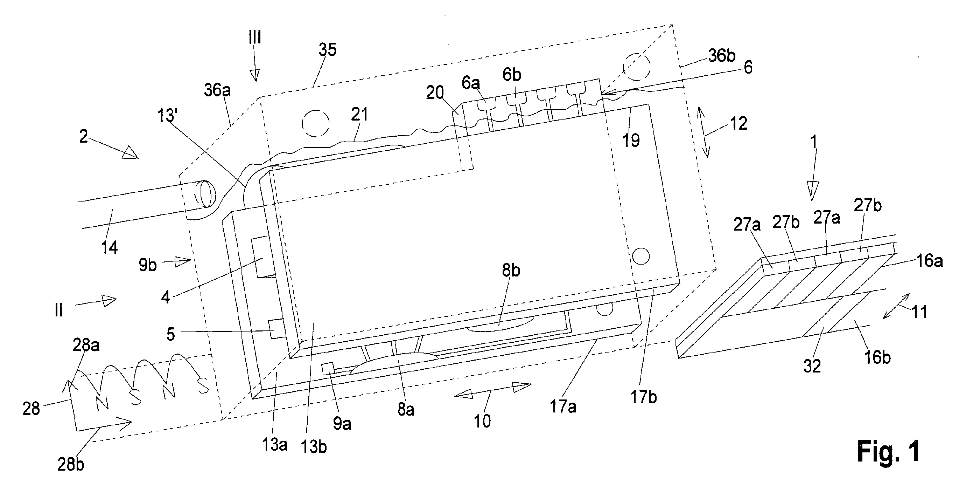

Die Figuren 1 bis 8 zeigen Bauformen vor allem des Kopfes der Sensoreinheit 2 der Vorrichtung, insbesondere deren Sensoreinheit 2, in ihrer körperlichen Ausbildung. Dabei ist die Sensoreinheit 2 ja in der Regel an einem - in den Figuren 1 - 6 nicht dargestellten - beweglichen Bauteil einer Maschine angeordnet, dessen Position detektiert werden soll, während der Maßstab 1, auf dessen Oberfläche sich die Sensoreinheit 2 in Meßrichtung 10 bewegt - an einem feststehenden Maschinenteil aufgebracht ist.

Wie besser die Schnittdarstellung der Fig. 2 zeigt, besteht der Maßstab 1 aus einem Magnetband 1a, bei dem auf wenigstens einer Spur 16a in Meßrichtung 10 jeweils gleich lange, jedoch unterschiedlich, beispielsweise gegensätzlich als Nord- und Südpol, magnetisierte, Segmente 27a, 27b hintereinander fortlaufend abwechselnd ausgebildet sind.

Eine weitere Spur 16b kann eine Referenzmarke 32 meist an nur einer einzigen Längsposition des Maßstabes 1 angeordnet sein, welche dann meist die Nulllage des Systems darstellt.

Dieses Magnetband 1a kann gemäß den Figuren 1 - 12 zum mechanischem Schutz auf der Oberseite abgedeckt von einem Edelstahl-Band 1b oder einem abriebfesten Kunststoffband, und auf der Unterseite mit einer Klebeschicht 1c ausgestattet, zum Aufbringen auf den gewünschten Untergrund.

Dabei muß die Referenzmarke 32 nicht integraler Bestandteil des Magnetbandes 1a und damit des übrigen Maßstabes 1 sein.

Der Maßstab 1 kann auch nur die fortlaufend abwechselnd magnetisierten Spuren wie Spur 16a umfassen, während die Referenzmarke 32 als separates kurzes Stück nur an einer Längsposition neben der Spur 16a lagefixiert, beispielsweise ebenfalls aufgeklebt, wird abhängig von dem Erfordernis des jeweiligen Anwendungsfalles.

Dabei ist es sinnvoll, diese Referenzmarke 32, die sehr genau positioniert werden muß, korrelierend mit einer bestimmten Längsposition der Sensoreinheit 2 und damit der an der Sensoreinheit 2 befestigten Maschinenbauteil anzuordnen. Zu diesem Zweck ist es möglich, gemäß Fig. 9 diese separate Referenzmarke 32 mit einem in der Lotrechten 12 zur Meßrichtung 10 aufragenden Anschlag 26 auszustützen, an dem die Stirnfläche 33 der Sensoreinheit 2 anschlagen kann, so daß diese Sensoreinheit 2 zusammen mit dem sie tragenden Maschinenteil in die gewünschte Position gebracht wird und dann die Referenzmarke 32 unter Anlage des Anschlages 26 an der Sensoreinheit 2 neben der Spur 16a des Maßstabes 1 lagefixiert wird.

In allen Fällen kommt es darauf an, daß - wie Fig. 2 zeigt - die innerhalb der Sensoreinheit 2 angeordneten mehreren Sensoren 2a, 2b einen solchen Abstand zueinander in Querrichtung 11 entsprechend der Spuren 16a, 16b, laufen, die sie abtasten sollen.

Zu diesem Zweck ist die innerhalb der Sensoreinheit 2 angeordnete Elektronik 9 auf einer oder mehreren Platinen, vorzugsweise auf zwei zueinander parallelen starren Platinen 13a, 13b, angeordnet und vergossen.

Die Elektronik befindet sich dabei entweder im Inneren eines (nicht dargestellten) Gehäuses oder die Elektronik ist nach Positionieren in einer Form 22, wie in Fig. 2 dargestellt - vergossen worden, wobei anschließend die Form 22 wieder entfernt wird, und die Umhüllung der Elektronik ausschließlich aus der Vergußmasse 21 besteht.

Wie in den Fig. 1, 2, 3 und 4, die die gleiche Bauform betreffen, zu entnehmen, erstrekken sich die beiden parallel liegenden Platinen 13a, 13b in Meßrichtung 10 sowie in der von der Ebene des Maßbandes, die durch die Meßrichtung 10 und die hierzu quer verlaufende Querrichtung 11 definiert ist, lotrecht abstehenden Lotrechten 12, mit gleichbleibendem Abstand. Die Bestückung der Platinen 13a, 13b erfolgt dabei vorzugsweise auf der zueinander gewandten Innenseite, was zusätzlich Beschädigungen von außen erschwert.

Die Platinen 13a, 13b erstrecken sich dabei mit ihren Frontkanten 17a, 17b bis nahe an die Frontfläche 34 der Sensoreinheit 2.

Bei der vorliegenden Bauform sind zwei Sensoren 2a, 2b innerhalb der Sensoreinheit 2 vorhanden, entsprechend der zwei vorhandenen Spuren 16a, 16b des Maßstabes 1.

Diese Sensoren 2a, 2b sind jeweils auf einer der festen Platinen 13a, 13b nahe an bzw. unmittelbar an deren Frontkante 17a, 17b angeordnet, vorzugsweise in Längsrichtung, der Meßrichtung 10, etwa in der Mitte dieser Platinen 13a, 13b.

Bezüglich der dem Maßstab 1 zugewandten Frontfläche 34 der Sensoreinheit 2 sind die Sensoren 2a, 2b damit nur so geringfügig zurückversetzt, daß sie von einer dünnen Schicht der Vergußmasse 21 als mechanischem Schutz und Schutz gegen Verschmutzung bedeckt sind.

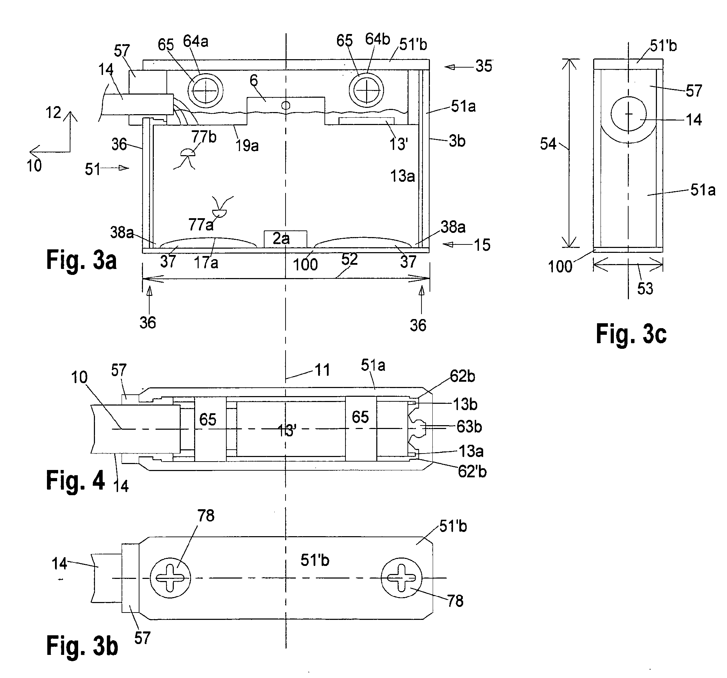

Die beiden festen Platinen 13a, 13b sind über eine flexible Platine 13' miteinander verbunden, die an der von der Frontkante 17a, 17b abgewandten Rückkante 19a, 19b jeder Platine 13a, 13b abstrebt. Dies ermöglicht es, daß vor dem Einbauen in der Sensoreinheit 2 die gesamte Platine 13, also bestehend aus den beiden festen Platinen 13a, 13b und deren verbindenden flexiblen Platine 13', die im wesentlichen die beiden festen Platinen verbindende Leiterbahnen aufweist, in der Abwicklung, also in einer Ebene ausgelegt bestückt und gehandhabt werden können, wie in Fig. 4 dargestellt.

Um den ebenfalls auf den Platinen untergebrachten Interpolator b hinsichtlich seines Faktors auch nachträglich noch einstellen bzw. verstellen zu können, müssen Kontaktpunkte 6a, 6b... der Sensoreinheit 2 auch nach deren Fertigstellung noch erreichbar sein, um hierdurch mittels Programmierung, um den in der Regel als Chip 4 ausgebildeten Interpolator 9b neu programmieren zu können.

Vor allem wenn die Elektronik 9 innerhalb eines Gehäuses der Sensoreinheit 2 nach der Montage vergossen wird, weist eine der Platinen 13a einen Fortsatz 20 auf, der über die ansonsten vorhandene Rückkante 19a vorsteht und sich nur über einen Teil der Länge der Platine 13a ersteckt, und auf dessen freiem Ende die Kontakpunkte 6a, 6b ... aufgebracht sind. Die verbindende flexible Platine 13' verbindet die beiden Platinen dagegen von der dem gegenüber zurückgesetzten Rückkante 19a, 19b ... aus. Dadurch ist es möglich, innerhalb eines vorhandenen Gehäuses der Sensoreinheit 2 deren Elektronik 9 zu vergießen durch Auffüllen mit Vergußmasse 21 von der Rückfläche 35 her bis über die flexible Platine 13' und auch die Rückkanten 19a, 19b der festen Platinen 13a, 13b hinweg, so daß aus dem Verguß auch nach dem Aushärten nur noch das freie Ende des Fortsatzes 20 und damit deren Kontaktpunkte 6a, 6b vorstehen und zugänglich bleiben. Geschützt werden die Kontaktpunkte 6a, 6b dann durch das Verschließen der Rückseite 35 der Sensoreinheit 2 mittels eines nicht näher dargestellten Deckels.

Das Kabel 14 wird dagegen vorzugsweise aus einer der in Meßrichtung 10 weisenden Stirnflächen 36a, 36b der Sensoreinheit 2 herausgeführt.

Weiterhin zeigen die Fig. 3a bis 3c den Kopf der Sensoreinheit 2 im fertig montierten Zustand im Längsschnitt (Fig. 3a) sowie in der Aufsicht von oben (Fig. 3b) und in der Stirnansicht von der Seite des Kabeleinlasses (Fig. 3c).

Fig. 4 zeigt den gleichen Kopf mit abgenommenem Deckel in der Aufsicht, also in gleicher Blickrichtung wie Fig. 3b.

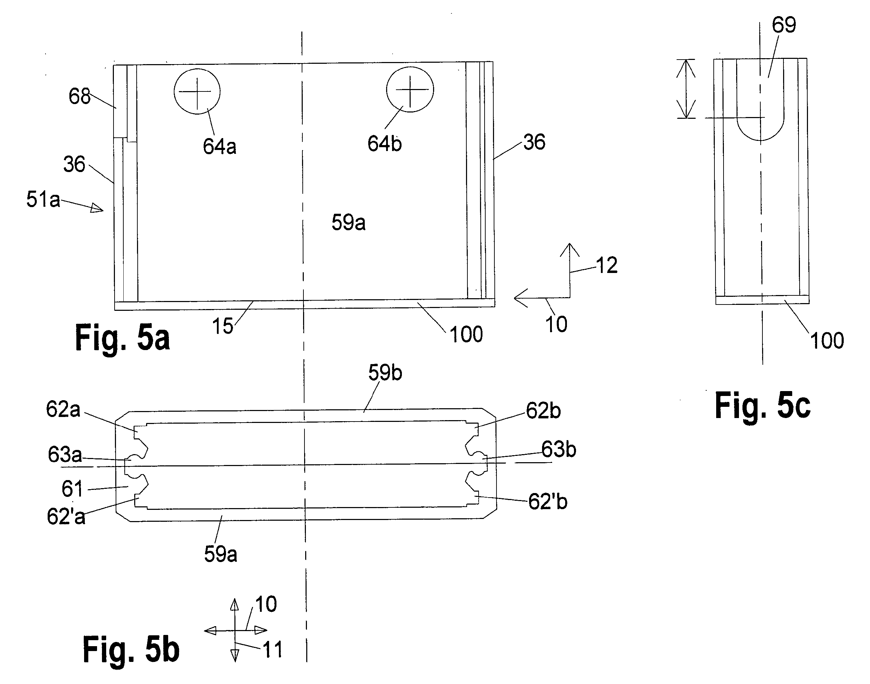

Der dabei verwendete Korpus 51a des Gehäuses 51 des Kopfes ist separat in drei Ansichten in den Fig. 5 dargestellt. Fig. 5b zeigt in der Aufsicht das umlaufend in sich geschlossene und nur in Durchgangsrichtung, der Blickrichtung der Fig. 5b, offene Kastenprofil mit seinen Seitenwänden 59a, 59b in der größeren Erstreckung, der Meßrichtung 10, und den quer hierzu verlaufenden Seitenwänden.

Das Kastenprofil des Korpus 51a ist dabei an der Frontfläche 15 verschlossen durch eine entsprechend dem Außenumfang des Kastenprofiles konturierte Frontplatte 100 in Form einer sehr dünnen, folienähnlichen Metallplatte, die am Außenumfang des Kastenprofiles bündig abschließt und durch einen von außen dagegen gerichteten Laserstrahl umlaufend mit diesem Kastenprofil verschweißt ist.

Bei entsprechender Einstellung der Parameter ist dies möglich trotz der stark unterschiedlichen Materialstärken der sehr dünnen Frontplatte 100 einerseits und des vergleichsweise dicken Kastenprofiles andererseits und auch der unterschiedlichen Materialien (Aluminium und Titan).

An den Innenseiten der Innenwände ist mittig jeweils eine Schraubnut 63a, b angeordnet mit einem Querschnitt, der im mittleren Bereich Teil einer Kreiskontur ist und damit einen Hinterschnitt bildet. Die freie vordere Öffnung der Schraubnut 63 ist etwa gleich breit wie die beidseits neben jeder Schaubnut 63a bzw. b angeordneten Platinennuten 62a, 62a' bzw. 62b, 62b', die nur geringfügig von der Innenfläche der Seitenwände 59a, b beabstandet sind. Wie die Fig. 3 und insbesondere Fig. 4 zeigen, sind in die einander gegenüberliegenden Paare 62a, b, 62a', b feste Platinen 13a, 13b in Verlaufsrichtung der Nuten eingeschoben, die durch die Nuten formschlüssig geführt werden und von der in Fig. 3a unten liegenden Frontfläche 15 des Kopfes aus nach oben reichen bis nahe an die Kabeltülle 57 heran, die in einer - siehe Fig. 5 - U-förmigen, zu der Frontfläche 15 gegenüberliegenden Rückseite des Korpus 51a) hin offenen U-förmigen Tüllenausnehmung 69 der einen Stirnwand 36 des Korpus 51a eingesteckt und mittels Formschluß befestigt ist.

Durch die Kabeltülle 57 führt das Kabel 14, dessen Kabelmantel kurz innerhalb der Kabeltülle 57 endet, und dessen einzelne Adern mit der Schaltung auf den Platinen 13a, b elektrisch verbunden ist. Ebenso wie Kabel 14 und Kabeltülle 57 befinden sich im oberen, also rückwärtigen, Bereich des Korpus 51a auch Durchgangsbohrungen 64a, b in den Seitenwänden 59a, b des Korpus 51a, die vorzugsweise symmetrisch zur Längsmitte und im gleichen Abstand zur Rückseite des Korpus 51a angeordnet sind. Die Durchgangsbohrungen 64a, b dienen dem Hindurchstecken und Verpressen oder Verschrauben von Querhülsen 65, die damit trotz der Durchsteckmöglichkeit für Schrauben zum Befestigen dieses Kopfes eine Abdichtung des Innenraumes des Kopfes gegenüber der Umgebung gewährleisten.

Gemäß Fig. 3a reichen die Platinen 13a, b im wesentlichen nur bis zur Kabeltülle 57 und damit bis maximal zur Unterkante der Querbohrungen 64a, b, wobei bei einer Platine ein Fortsatz 20 über die Rückkante 19a, b vorsteht, und bis in den Höhenbereich der Querbohrungen 64a, b, vorzugsweise zwischen diese Querbohrungen, hineinreicht als Kontraktiereinheit.

Die Platinen 13a, b sind über eine flexible Platine 13' von Oberkante zu Oberkante 19a, b miteinander und elektrisch verbunden.

Die Frontkante 17a, b der Platinen reicht zwar bis zur Frontfläche 15 des Korpus 51a herab, jedoch weist diese beidseits der Mitte Einbuchtungen 37 auf, so daß nur im mittleren und in den Seitenbereichen Vorsprünge 38a), b) diese Frontfläche 15 erreichen. Auf dem mittleren Vorsprung ist dabei - wie alle elektrischen Bauelemente auf der gegeneinander gewandten Innenseite der Platinen 13a), b) - ein Sensor 2a) für das Abtasten des Maßstabes angeordnet.

Die gesamte Elektronik innerhalb des Korpus 1a) ist mittels einer Vergußmasse 51 vergossen, die anschließend aushärtet und damit auch die Frontkante 17a), b) der Platinen 13a), b) wegen deren Einbuchtungen 37 sicher umschließt. Wegen des Schutzes der Vorderkanten der Platinen 13a, b durch die Frontplatte 100 sind diese Einbuchtungen 37 nicht unbedingt notwendig, und können auch weggelassen werden. Im oberen Bereich reicht der Verguß bis über die normale Rückkante 19a), b) der Platinen 13a), b) und auch deren verbindende, flexible Platine 13' hinweg, läßt jedoch das nach oben ragende freie Ende des Fortsatzes 20 und damit die dort angeordnete Kontraktiereinheit 6 frei.

In den Fig. 3 ist auf die Rückseite 35 des Korpus 51a), mit dem auch die Kabeltülle 57 abschließt, ein ebener Deckel 51'b) in Form einer beidseits ebenen Platte aufgesetzt, dessen Außenkontur der Außenkontur des Korpus 51a) entspricht, und der mittels Schrauben 78 durch den Deckel 71'b hindurch in die stirnseitig offenen Enden der Schraubnut 63a, b hineinverschraubt ist. Nach Abnehmen des Deckels ist jedoch die Kontaktiereinheit 6 auf dem Fortsatz 20 zugänglich, so daß durch Aufstecken eines geeigneten Steckers oder Ähnlichem auf diese Kontaktiereinheit 6 die bereits vergossene Elektronik beeinflußt, insbesondere neu programmiert werden kann, zugeschnitten auf den jeweiligen Anwendungsfall des Kopfes.

Fig. 4 zeigt den Kopf bei abgenommenem Deckel 51'b, in dem die den Korpus 51a vollständig durchdringenden Querhülsen 65 zu erkennen sind.

In Fig. 3a sind ferner Leuchtdioden 77a, b zu erkennen, die ebenfalls auf einer der Platinen 13a, b angeordnet sind und entweder (77a) nahe der Frontfläche 15 oder nahe der Kabeltülle 57 angeordnet sind. Das Licht dieser Leuchtdioden kann auch bei metallenem Korpus 51a und Deckel 51'b von außen erkannt werden, wenn die verwendete Vergußmasse 51 durchsichtig ist und im Falle der Diode 77b auch die Kabeltülle 57. Das Licht der Diode 77a wird von der Oberseite des Maßstabes 1 reflektiert und kann ebenfalls auch im Einsatz des Kopfes erkannt werden. Die eine oder mehreren Leuchtdioden, die sich bei Einsatz mehrerer Leuchtdioden durch die Farbe unterscheiden, dienen der Anzeige von bestimmten Betriebszuständen, wie fehlerfreie Funktion, zu großer Abstand vom Maßstab, zu hohe Bewegungsgeschwindigkeit des Kopfes oder ähnlichem.

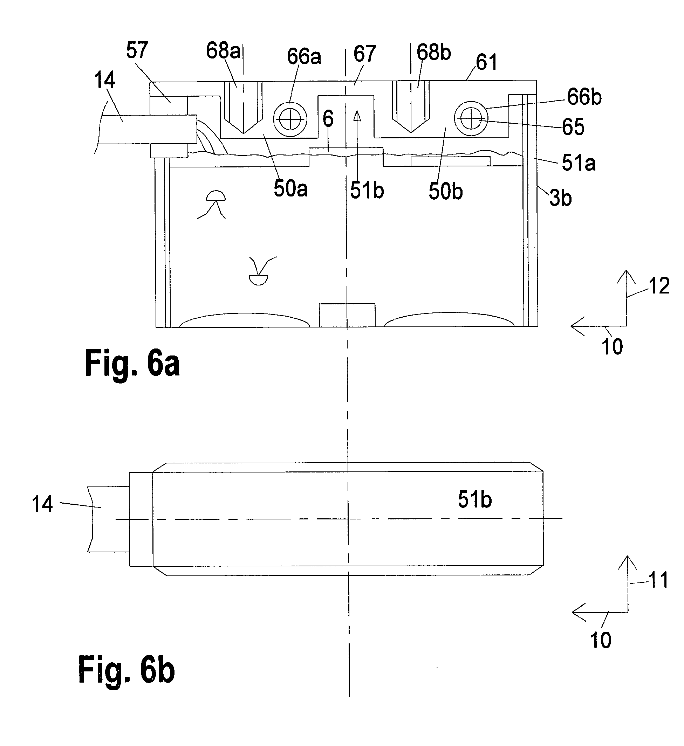

Die Fig. 6 unterscheiden sich von den Fig. 3 durch einen anderen Deckel 51b.

Wie Fig. 6a zeigt, ist der Deckel 51 b selbst ein Abschnitt eines Deckelprofiles 61. Dieses besteht aus einer Deckelplatte 67, welches eine Erstreckung in Längsrichtung aufweist entsprechend der Erstreckung der Außenmaße des Korpus 51a, und zwei zur gleichen Seite hin abstrebende Vorsprünge 50a, b, die auch einen durchgehenden einzigen Vorsprung 50 bilden können, jedoch von den seitlichen Enden der Deckelplatte 67 zurückversetzt sind. Der Deckel 51b stellt damit einen Abschnitt eines Strangpreßprofiles dar, dessen Verlaufsrichtung die Blickrichtung der Fig. 6a, also die Querrichtung 11 des Kopfes, ist.

In den Vorsprüngen 50a, b sind Querbohrungen 66a, b bereits im Profil angeordnet, die sich in der Position und insbesondere auch im Durchmesser mit den Querbohrungen 64a, b des Korpus 51a fluchten, so daß mittels Hindurchstecken z. B. von Querhülsen 65, aber auch von Schrauben nicht nur eine Verbindung von Deckel und Korpus, sondern auch eine Befestigung des Kopfes an einem anderen Bauteil möglich ist.

Um zusätzlich auch den Kopf von der Rückseite her mittels einer Verschraubung, die in lotrechter Richtung 12 gerichtet ist, befestigen zu können, sind gleichzeitig in den Vorsprüngen 50a, b jeweils benachbart zu den Querbohrungen 66a, b Befestigungsgewinde 68a, b in den Deckel 51b eingearbeitet, die als nach außen offene Sacklöcher ausgebildet sind.

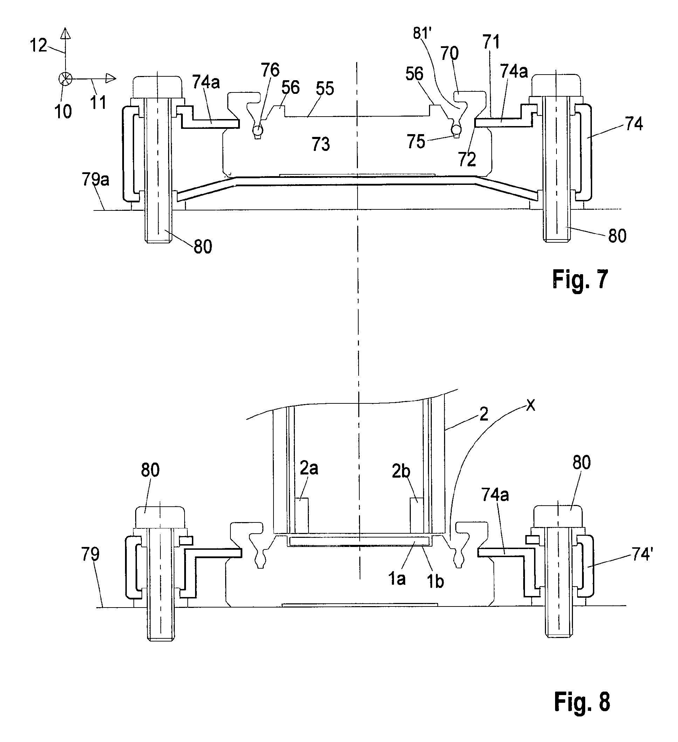

Fig. 7 und 8 zeigen - mit Blick in Meßrichtung 10 - eine Profilschiene 73 sowie deren Befestigung an einem Untergrund 79 mittels Schrauben 80.

Die Profilschiene 73 dient zum Aufnehmen des Maßstabes 1, der - ebenso wie die Sensoreinheit 2 in Fig. 8 dargestellt ist, in Fig. 7 aus Übersichtlichkeitsgründen jedoch nicht. Ansonsten unterscheiden sich die Darstellungen durch die Art der Halteklammern 74 in Fig. 7 und 74' in Fig. 8.

Die Profilschiene 73 weist an ihren äußeren seitlichen Kanten eine nach außen offene Nut auf, deren nach oben weisende und insbesondere parallel zur Unterseite der Profilschiene 73 verlaufende Schulter 72 die eine Flanke, deren nach außen weisende Schulter 71 den Boden der Nut bilden, deren andere Flanke schräg nach oben ansteigt. Die Halteklammern 74, 74' drücken dabei mit ihrem Halteschenkel 74a, der parallel zum Untergrund 79 verläuft, auf die horizontal verlaufende Schulter 72. Wegen der Symmetrie zur Längsmitte erfolgt dies vorzugsweise auf einander gegenüberliegenden Seiten jeweils an der selben Längsposition.

Seitlich außerhalb der Profilschiene 73 wird die Halteklammer 74 mittels einer sie durchdringenden Schraube 80 gegen den Untergrund 79 verschraubt.

Dabei ist bei der Lösung gemäß Fig. 7 die Halteklammer 74 von der linken zur rechten Seite der Profilschiene 73 durchgehend etwas C-förmig gestaltet, so daß die Halteklammer 74 auf jeder Seite doppelt durch die parallel zueinander liegenden Schenkel von einer Schraube 80 durchdrungen wird. Die Profilschiene 73 liegt damit auf der Innenseite des durchgehenden Schenkels dieser C-förmigen Halteklammer 74 auf.

Dagegen sind bei der Lösung gem. Fig. 8 die Halteklammern 74' jeweils einzeln auf jeder Seite angeordnet und ebenfalls C-förmig ausgebildet, wobei jedoch der Halteschenkel 74a weiter in Richtung der Profilschiene 73 vorsteht und in die dortige äußere Nut eingreifen kann als der andere frei endende und über dem Halteschenkel 74a liegende Gegenschenkel. Auch hier ist jede Klammer 74' von den Schrauben 80 jeweils durch beide Schenkel hindurch verschraubt, so daß ein Festziehen der Schraube 80 auch hier ein Zusammenpressen der Schenkel und damit ein Herabdrücken der Profilschiene 73 nach unten bewirkt.

Die Profilschiene 73 ist im wesentlichen ebenfalls C-förmig nach oben offen geformt mit einer mittig angeordneten nach oben weisenden Basisfläche 55 zum Aufsetzen des Maßstabes 1, dessen Magnetband 1a mittels eines Klebestreifens 1b auf diese Basisfläche 55 aufgeklebt ist. Seitlich neben der Basisfläche und neben dem Maßstab 1 ragen Aufwölbungen 56 soweit nach oben, daß die Oberseite des auf der Profilschiene 73 montierten Maßstabes 1 dem gegenüber etwas zurückgesetzt ist.

Die frei endenden Schenkel der C-Form ragen oberhalb der oberen Enden dieser Aufwölbungen 56 etwa parallel zum Untergrund 79 zur Mitte hin weisend vor, jedoch noch außerhalb der Aufwölbungen 56 und bilden mit ihren frei endenden Vorsprüngen 70 die seitliche Führung für einen Meßkopf 2, der keine exakte Seitenführung durch das ihn tragende Bauteil erfährt.

Zwischen den Aufwölbungen 56 und damit der Basisfläche 55 und den höher aufragenden Vorsprüngen 70 ist auf jeder Seite der Mitte der Profilschiene 73 jeweils eine hinterschnittene Nut 75 mit etwa rundem mittleren Querschnittsbereich wie anhand der Schraubnuten 63a, b des Korpus 51 beschrieben, angeordnet. Diese dienen zum stirnseitigen Aufschrauben eines Abschlußdeckels oder auch zum Einsetzen von Paßstiften 76 in die hinterschnittene, verbreiterte Nut in stirnseitiger Richtung, um mehrere Elemente einer Profilschiene 73 stirnseitig fluchtend hintereinander ansetzen zu können.

Die Unterseite der Profilschiene 73 ist vorzugsweise im mittleren Bereich gegenüber den Rändern etwas zurückversetzt, so daß die Profilschiene 73 nur mit ihren Randbereichen auf dem Untergrund oder auf darunter hinweg verlaufenden Halteklammern 74 aufsitzt.

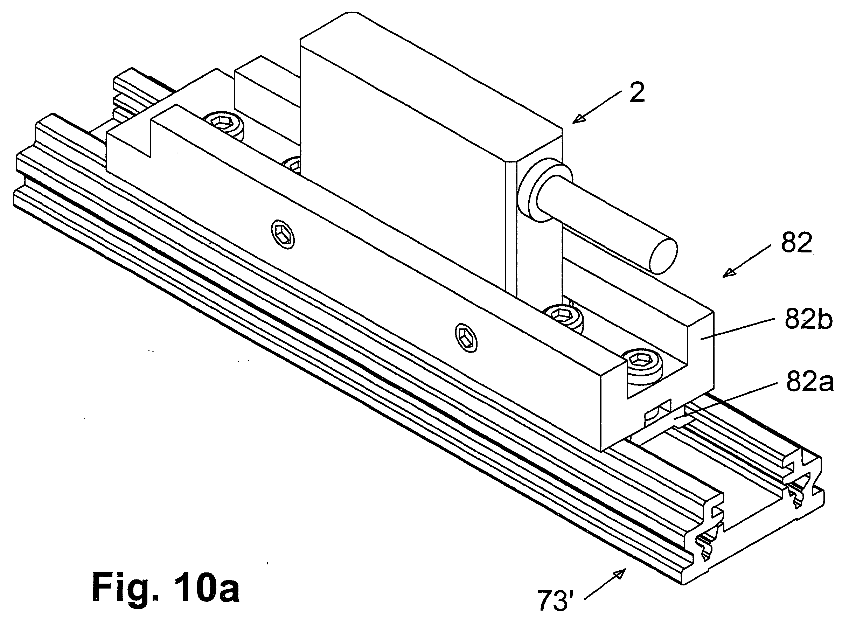

Fig. 10a zeigt eine Perspektivdarstellung einer weiteren Bauform 73' der Profilschiene, mit einem daran geführten Schlitten 82, an welchem der Kopf der Sensoreinheit 2 befestigt, insbesondere verschraubt ist.

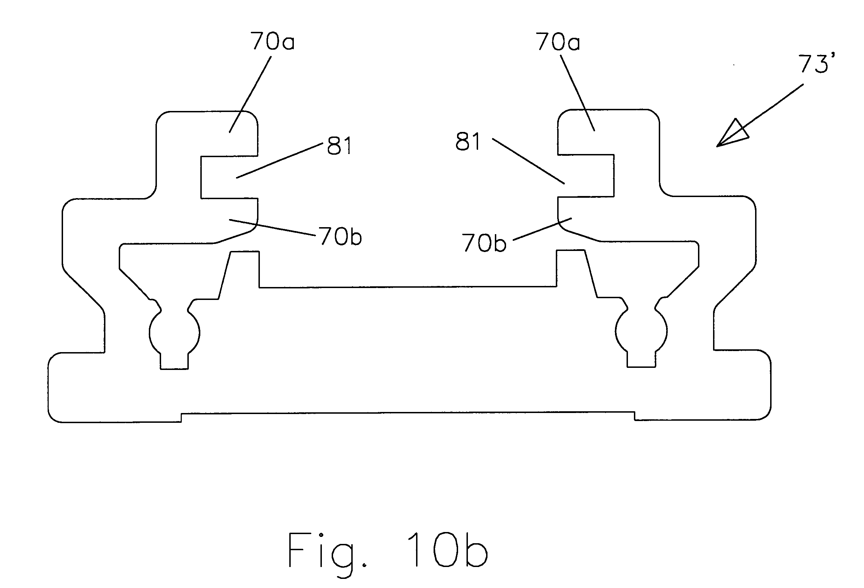

Fig. 10b zeigt die Profilschiene 73' gemäß Fig. 10a alleine und betrachtet in Längsrichtung der Profilschiene 73'.

Wie am besten in Fig. 10b zu erkennen, unterscheidet sich diese Form der Profilschiene 73' von derjenigen der Figuren 7 und 8 dadurch, daß im Fall der Fig. 10b die Vorsprünge 70 als gabelförmige Vorsprünge 70a, 70b ausgebildet sind, die zwischen sich jeweils eine zur Längsmittelebene der Profilschiene 73' hin offene, insbesondere rechteckförmige, Führungsnut 81 bilden, so daß eine horizontal, also parallel zum Boden der Profilschiene 73', liegende entsprechend dimensionierte Platte in Längsrichtung in die Profilschiene 73' eingeschoben werden kann.

Statt einer Platte wird dabei ein U-Profil als Unterteil 82a eines Schlittens 82 verwendet, wie am besten in Fig. 10a zu erkennen.

Mit diesem Unterteil 82a ist ein Oberteil 82b verschraubt, auf welchem der Kopf der Sensoreinheit 2 befestigt ist.

Das Oberteil 82b ist dabei - in Längsrichtung der Profilschiene betrachtet - U-förmig ausgebildet, und in dem nach oben offenen inneren Freiraum dieser U-Form ist der Kopf der Sensoreinheit 2 aufgeschraubt.

Dieses Oberteil 82b wird vom Unterteil 82a knapp oberhalb des oberen Endes der Vorsprünge 70 geführt und ragt über diese seitlich etwas hinaus.

Ferner kann ein Abdeckband 83 in Form eines Flachmateriales zum Schutz des Magnetbandes 1a vorhanden seien, welches sich in der Breite der Profilschiene 73 über die gesamte Basisfläche 55 und das darin eingelegte Magnetband 1a sowie die daneben seitlich aufragenden Aufwölbungen 56 hinweg erstreckt bis unter die nach innen gekröpften Vorsprünge 70 des Profiles hinein.

Das Abdeckband 83 kann somit formschlüssig in Längsrichtung der Profilschiene 73 eingeschoben werden, und muß lediglich aus einem nicht magnetisierbaren Material, beispielsweise Edelstahl oder einem Kunststoff, beispielsweise PEEK, bestehen.

Des weiteren können sich die Nuten 75 zum einschieben der Paßstifte 76 gegenüber den vorbeschriebenen Varianten weiter in der Mitte der Profilschiene 73, nämlich unterhalb der Basisfläche 55, befinden.

### BEZUGSZEICHENLISTE

- 1: Maßstab
- 2: Sensoreinheit
- 2a: Sensor
- 4: erster Chip
- 5: zweiter Chip
- 6: Kontaktiereinheit
- 6a, 6b: Kontaktpunkte
- 7: Programmiereinheit
- 8: dritter Chip
- 9a: Wandler
- 9b: Interpolator
- 9c: Ausgabeeinheit
- 10: Meßrichtung
- 11: Querrichtung
- 12: Lotrechte zur Meßstabebene
- 13a, 13b: Platine
- 13': flexible Platine
- 14: Kabel
- 15: Frontfläche der Sensoreinheit
- 16: Spuren
- 17a, 17b: Frontkante
- 19a, 19b: Rückkante
- 20: Fortsatz
- 21: Vergussmasse
- 22: Form
- 23: Auflager
- 24: Kontaktöffnungen
- 25: Leuchtdiode
- 26: Anschlag
- 27a, 27b: Segmente
- 28: Signal
- 29a, 29b: Rechteck-Signal
- 30: Digitalanzeige
- 31: Computer
- 32: Referenzmarke
- 33: Stirnfläche
- 34: Frontfläche
- 35: Rückseite
- 36a, 36b: Stirnfläche
- 37: Einbuchtungen
- 38a, 38b: Vorsprung
- 40a, 40b: Bohrungen
- 50: Vorsprung
- 51: Gehäuse
- 51a: Korpus
- 51b: Deckel
- 52: Länge
- 53: Breite
- 54: Höhe
- 55: Basisfläche
- 56: Aufwölbung
- 57: Kabeltülle
- 58: Querbohrung
- 59a, 59b: Seitenwände
- 60: Korpus-Profil
- 61: Deckel-Profil
- 62a, 62b: Platinen-Nut
- 63a, 63b: Schraubnuten
- 64a, 64b: Querbohrung
- 65: Querhülse
- 66a, 66b: Querbohrung
- 67: Deckelplatte
- 68a, 68b: Befestigungsgewinde
- 69: Tüllenausnehmung
- 70: Vorsprünge
- 70a,b: gabelförmige Enden
- 71: Schulter
- 72: Schulter
- 73: Profilschiene
- 74: Halteklammer
- 74a: Halteschenkel
- 75: Nut
- 76: Paßstift
- 77a, 77b: Leuchtdiode
- 78: Schraube
- 79: Untergrund
- 80: Schrauben
- 81: Führungsnut
- 82: Schlitten
- 82a: Unterteil
- 82b: Oberteil
- 83: Abdeckband
- 100: Frontplatte

## Patentansprüche

**1.** Längenmeßvorrichtung mit
- einem Maßstab (1), der in Meßrichtung (10) abwechselnd codiert ist,
- einer Sensoreinheit (2), die in Meßrichtung (10) relativ zum Maßstab (1) bewegbar ist und im Sensorkopf wenigstens einen Sensor (2a) zum berührungslosen Detektieren der magnetisch modulierten Signale des Maßstabes (1) umfaßt sowie eine Elektronik (9), die auf wenigstens einer Platine (13a) angeordnet ist,
**dadurch gekennzeichnet, daß**
der Kopf der Sensoreinheit (2) ein Gehäuse (51) mit einem Gehäusekorpus (51a) umfaßt, und der Gehäusekorpus (51a) in wenigstens einer Richtung mindestens abschnittweise einen gleichbleibenden Querschnitt aufweist.

**2.** Längenmeßvorrichtung nach Anspruch 1,
**dadurch gekennzeichnet, daß**
- der Gehäusekorpus (51a) des Kopfes an seiner Meßseite durch eine Frontplatte (100) dicht verschlossen ist und insbesondere die Frontplatte (100) stumpf auf der vorderen Stirnfläche des übrigen Korpus (51a) aufliegt und mit dieser insbesondere verklebt oder verschweißt ist, und insbesondere
- die Frontplatte (100) aus nicht magnetischem Metall, insbesondere Titan oder Aluminium besteht, und insbesondere
- die Frontplatte (100) bei einem magneto-resistivem Sensor eine Dicke von 10 bis 500 µm, insbesondere von 10 bis 50 µm, aufweist.

**3.** Längenmeßvorrichtung nach einem der vorhergehenden Ansprüche,
**dadurch gekennzeichnet, daß**
- die Frontplatte (100) mit dem Rest des Korpus (51a) lichtbogenverschweißt oder laserverschweißt oder ultraschallverschweißt ist, und insbesondere, und insbesondere
- die Materialien der Frontplatte (100) und des übrigen Korpus (51a) identisch sind, und insbesondere
- die Materialien der Frontplatte (100) und des übrigen Korpus (51a) unterschiedlich jedoch miteinander legierbar, insbesondere miteinander verschweißbar sind, insbesondere der Korpus (51a) aus Aluminium und die Frontplatte aus Titan besteht.

**4.** Längenmeßvorrichtung nach einem der vorhergehenden Ansprüche,
**dadurch gekennzeichnet, daß**
- der Gehäusekorpus (51a) in der zur Ebene des Maßstabes (1) lotrechten Richtung (12) einen gleichbleibenden Querschnitt aufweist, und insbesondere
- der Gehäusekorpus (51a) über seine gesamte Erstreckung, insbesondere seine gesamte Höhe (12), einen gleichbleibenden Querschnitt aufweist, und/oder insbesondere
- der Gehäusekorpus (51a), insbesondere das gesamte Gehäuse (51), aus Metall, insbesondere aus Aluminium besteht, und insbesondere
- das Gehäuse (51) ein im Ziehverfahren oder Pressverfahren hergestelltes Gehäuse mit offener Frontfläche (15) ist.

**6.** Längenmeßvorrichtung nach einem der vorhergehenden Ansprüche,
**dadurch gekennzeichnet, daß**
- der Gehäuse-Korpus (51a) ein Abschnitt eines Korpusprofiles (60), insbesondere durch Strangpressen oder Fliesspressen hergestellt, ist mit einer insbesondere offenen Frontfläche (15) und einer durch einen Deckel (51b) verschließbaren Rückseite (35), oder insbesondere aus zwei Halbschalen besteht, die insbesondere ebenfalls durch Strangpressen oder Fliesspressen hergestellt sind, und/oder insbesondere
- der Deckel (51b) ein Abschnitt eines zweiten Deckelprofiles (61) ist, und insbesondere
- der Deckel (51b) gelenkig mit einer Kabeltülle (57), insbesondere einstückig mit der Kabeltülle (57) ausgebildet ist, die der Hindurchführung des Kabels (8) durch die Wandung des Gehäuses (51) dient.

**7.** Längenmeßvorrichtung nach einem der vorhergehenden Ansprüche,
**dadurch gekennzeichnet, daß**
- das Korpusprofil (60) des Gehäusekorpus (51a) symmetrisch zur Längsrichtung, der Meßrichtung (10), und/oder symmetrisch zur Querrichtung (11) ausgebildet ist, und/oder insbesondere
- das Korpusprofil (60) bezüglich der in Querrichtung (11) verlaufenden Mitte symmetrisch zueinander wenigstens ein Paar einander gegenüberliegende Platinennuten (62a, b) auf den Innenseiten der Stirnwände (33a, b) aufweist, zum Einschieben einer Platine in Verlaufsrichtung der Platinennuten (62a, b), insbesondere in der lotrechten Richtung (12), und/oder insbesondere
- das Korpusprofil (60) auf der Innenseite der Stirnwände (33a, b) bezüglich der in Querrichtung (11) verlaufenden Mitte einander gegenüberliegend wenigstens ein Paar von hinterschnittenen Schraubnuten (63a, b) aufweist, und insbesondere
- die Schraubnuten einen kleinsten freien Querschnitt besitzen, der größer ist als die Dicke der festen Platinen (13a, b) und insbesondere der Breite der Platinennuten (62a, b) entspricht, und insbesondere
- der Deckel (51 b) eine ebene Platte mit einer Grundfläche entsprechend der Außenkontur des Korpusprofiles (60) ist, auf der ebenen Rückseite (35) des Korpusprofiles (60) aufliegt und insbesondere über Durchgangsöffnungen verschraubt ist, indem die Schrauben in die Schraubnuten (63a, b) eingreifen.

**8.** Längenmeßvorrichtung nach einem der vorhergehenden Ansprüche,
**dadurch gekennzeichnet, daß**
- in den Seitenwänden (59a, b) des Korpus (51a) nahe dessen Rückseite (35) wenigstens ein Paar von zueinander fluchtenden Querbohrungen (64a, b), vorzugsweise zwei Paare (64a, 64b, 84'a, 64'b) von Querbohrungen vorhanden sind zum Befestigen der Sensoreinheit (2) an einem anderen Bauteil, und/oder insbesondere
- in jedem Paar von Querbohrungen (64a, 64b, 64'a, 64'b) eine den Korpus (51a) durchdringende und in den Seitenwänden (59a, 59b) verklemmte oder verklebte Querhülse (65) angeordnet ist.

**9.** Längenmeßvorrichtung nach einem der vorhergehenden Ansprüche,
**dadurch gekennzeichnet, daß**
- der Deckel (51b) aus einem Abschnitt eines quer zur Verlaufsrichtung des Korpusprofiles (60) verlaufenden Deckelprofiles (61) besteht und insbesondere wenigstens ein Paar von Querbohrungen (66a, 66b) aufweist, welches nach Positionieren des Deckels mit den Querbohrungen (64a, 64b) des Korpus (51a) fluchten und insbesondere zur Verschraubung des Deckels (51b) mit dem Korpus (51a) dienen, und insbesondere
- ein Deckel (51 b) zwischen die Seitenwände (59a, 59b) hineinragt und zu diesem Zweck die Stirnwände (33a, 33b) des Korpus (51a) entsprechend der Dicke des Deckels (51 b) an der Rückseite (35) entfernt sind, und/oder insbesondere
- ein Deckel (51b) wenigstens ein Befestigungsgewinde (68a) aufweist, welches insbesondere als zur Außenseite des Gehäuses (51) hin offene Sacklochbohrung ausgebildet ist und insbesondere in Längsrichtung des Korpusprofiles (60) verläuft, und insbesondere
- ein Deckel (51b) im Bereich des Befestigungsgewindes (68a ...) eine Dicke besitzt entsprechend mindestens dem Durchmesser der Querbohrungen (66a, 66b) und vorzugsweise in Längsrichtung, der Meßrichtung (10), versetzt neben jeder der Querbohrungen (66a, 66b) ein Befestigungsgewinde (68a, 68b) angeordnet ist.

**10.** Längenmeßvorrichtung nach einem der vorhergehenden Ansprüche,
**dadurch gekennzeichnet, daß**
- eine Elektronikschaltung auf zwei festen Leiter-Platinen (13a, 13b) angeordnet ist, die über eine flexible Leiter-Platine (13') miteinander verbunden sind, und je eine der festen Platinen (13a, 13b) in einem Paar von Platinennuten (62a, 62b) angeordnet ist und die verbindende flexible Leiter-Platine (31') die beiden festen Leiter-Platinen (31a, 31b) auf deren rückwärtiger Kante verbindet, und insbesondere
- eine der beiden Festplatinen (13a, 13b) einen über die Rückkante (19) überstehenden Fortsatz (20) mit elektrischen Kontaktpunkten (6a, 6b ...) einer Kontaktiereinheit (6) aufweist und der Fortsatz (20) in einem Bereich in Meßrichtung (10) angeordnet ist, in dem keine Querbohrungen (64a, 64b) im Korpus (51a) des Gehäuses (51) vorhanden sind, und insbesondere
- eine dritte Platine in die Schraubennuten (63a, 63b) eingeschoben ist und insbesondere mit den beiden anderen festen Platinen (34a, 34b) über elektrisch leitende Verbindungen, insbesondere jeweils flexible Platinen (31', 31") verbunden ist und die Rückkante dieser Platine so weit vor der Rückseite (35) des Korpus (51a) endet, daß noch Schrauben zur Deckelbefestigung in die Schraubnuten (63a, 63b) von der Rückseite einschraubbar sind.

**11.** Längenmeßvorrichtung mit
- einem Maßstab (1), der in Meßrichtung (10) abwechselnd codiert ist,
- einer Sensoreinheit (2), die in Meßrichtung (10) relativ zum Maßstab (1) bewegbar ist und im Sensorkopf wenigstens einen Sensor (2a) zum berührungslosen Detektieren der magnetisch modulierten Signale des Maßstabes (1) umfaßt sowie eine Elektronik (9), die auf wenigstens einer Platine (13a) angeordnet ist,
**dadurch gekennzeichnet, daß**
- auch der Sensor (2a) auf einer Platine (13a) angeordnet ist, und/oder insbesondere
- der wenigstens eine Sensor (2a) in Form eines nackten, ungehäusten Schaltkreises, insbesondere Chips (8a) auf der Platine (13a) angeordnet ist, und/oder insbesondere
- weitere Komponenten der Elektronik (9), insbesondere deren Wandler (9a) und/oder deren Interpolator (9b) oder beide als nackter, ungehäuster Schaltkreis, insbesondere Chip (4, 5) auf einer der Platinen (13a, 13b) angeordnet sind.

**12.** Längenmeßvorrichtung mit
- einem Maßstab (1), der in Meßrichtung (10) abwechselnd codiert ist,
- einer Sensoreinheit (2), die in Meßrichtung (10) relativ zum Maßstab (1) bewegbar ist und im Sensorkopf wenigstens einen Sensor (2a) zum berührungslosen Detektieren der magnetisch modulierten Signale des Maßstabes (1) umfaßt sowie eine Elektronik (9), die auf wenigstens einer Platine (13a) angeordnet ist,
**dadurch gekennzeichnet, daß**
- die Elektronik (9) in einer wenigstens teilweise aushärtenden Vergußmasse (21), deren Schrumpfung beim Aushärten so gering ist, dass die Elektronik beim Aushärten nicht beschädigt wird, insbesondere Epoxidharz, die insbesondere 10 % bis 75 % Füllstoff, z.B. Quarzmehl enthält, vergossen ist, und insbesondere
- wenigstens die aktiven elektronischen Bauelemente der Elektronik (9) wie Schaltkreise, insbesondere Chips (8a, 8b, 4, 5), vollständig von der Vergußmasse umhüllt sind, ausgenommen die Querschnitte, deren elektrischer Kontakte zur Platine (13a, 13b), und insbesondere
- die Außenflächen der formhaltigen, die Elektronik (9) umgebenden, Vergußmasse (21) gleichzeitig die Außenflächen der Sensoreinheit (2) sind.

**13.** Längenmeßvorrichtung mit
- einem Maßstab (1), der in Meßrichtung (10) abwechselnd codiert ist,
- einer Sensoreinheit (2), die in Meßrichtung (10) relativ zum Maßstab (1) bewegbar ist und im Sensorkopf wenigstens einen Sensor (2a) zum berührungslosen Detektieren der magnetisch modulierten Signale des Maßstabes (1) umfaßt sowie eine Elektronik (9), die auf wenigstens einer Platine (13a) angeordnet ist,
**dadurch gekennzeichnet, daß**
- die Breite (51) des Kopfes der Sensoreinhait (2) maximal das 2,0-fache der Breite des Maßstabes (1) beträgt, insbesondere nicht breiter ist als der Maßstab (1), vorzugsweise weniger breit ist als der Maßstab (1), und insbesondere
- die Erstreckung des Kopfes in Meßrichtung (10) nicht größer ist als das 70fache, insbesondere das 50fache der Erstreckung eines Segmentes (27a, 27b) des Maßstabes (1), und/oder insbesondere
- die Rückseite (35) des Kopfes der Sensoreinheit (2) plan ist und/oder die Seitenwände (33a, 33b) des Kopfes der Sensoreinheit außen plan sind.

**14.** Verfahren zum Herstellen der Sensoreinheit (2) einer Längenmeßvorrichtung mit folgenden Schritten:
- elektrisch leitendes Verbinden der Adern des Kabels (8) mit den Kontaktpunkten (39a, 39b, 39c) der Schaltung auf der wenigstens einen Platine (13a),
- Einschieben der wenigstens einen Platine (13a, 13b) in Verlaufsrichtung der Nuten im Inneren des Korpusprofiles (60), insbesondere die Platinennuten (62a, 62b),
- Einschieben der Kabeltülle (57) mit hindurchführendem Kabel (8) von der Rückseite (35) des Korpus (51a) her in die Tüllenausnehmung (69),
- dichtes Aufdrücken des Korpus (51a) mit der ebenen Frontfläche (15) auf einen ebenen abdichtenden Untergrund,
- Vergießen des Inneren des Korpus (51a) unter Freilassung der über die sonstige Rückkante (19a...) der wenigstens einen Platine (13a, 13b) unter Freilassung der Kontaktpunkte (6a, 6b...) der Kontaktiereinheit (6), die über die Rückkante (19a) nach hinten vorstehen,
- nach dem Aushärten Abheben des Korpus (51a) vom abdichtenden Untergrund,
- elektrisch leitendes Verbinden der Kontaktiereinheit (6) mit einer Programmiereinheit zum Programmieren wenigstens des Interpolators (9b) der Elektronik (9) der Sensoreinheit (2),
- nach Abnehmen der Kontaktiereinheit Ansetzen des Deckels (51b) an der Rückseite (35) des Korpus (51a) der Sensoreinheit (2) und Befestigen zum Schutz der darunterliegenden Kontaktiereinheit (6), und/oder insbesondere
- vor dem Einschieben der Platinen (13a, 13b) in den Korpus (51a) dieser hinsichtlich seiner Erstreckung in der Lotrechten (12), insbesondere der Verlaufsrichtung des Korpusprofiles (60), auf das gewünschte Maß gekürzt wird, insbesondere an der Frontfläche (15) die Kürzung vorgenommen wird, und/oder insbesondere
- mehrere feste Platinen (13a, 13b) über eine flexible Platine (13') miteinander verbunden und vor dem Einschieben in die inneren Nuten des Korpus (51a) in eine zueinander parallele Lage entsprechend des Abstandes der Paare von Nuten, insbesondere der Platinennuten (62a, 62b, 62'a, 62'b) und/oder der Schraubennuten (63a, 63b) geklappt und gemeinsam eingeschoben werden, insbesondere mit der gebogenen flexiblen Platine (13') voraus, und/oder insbesondere
- nach dem Entfernen der Programmiereinheit und vor dem Aufsetzen des Dekkels (51b) ein weiteres Vergießen auch der Kontaktpunkte (6a, 6b) der Kontaktiereinheit (6) erfolgt, und/oder insbesondere
- das Einschieben der wenigstens einen Platine (13) in die Nuten und der Kabeltülle (5) mit Kabel (8) in die Ausnehmung (69) gemeinsam von der Rückseite (35) her erfolgt.

**15.** Längenmeßvorrichtung mit
- einem Maßstab (1), der in Meßrichtung (10) abwechselnd codiert ist,
- einer Sensoreinheit (2), die in Meßrichtung (10) relativ zum Maßstab (1) bewegbar ist und im Sensorkopf wenigstens einen Sensor (2a) zum berührungslosen Detektieren der magnetisch modulierten Signale des Maßstabes (1) umfaßt sowie eine Elektronik (9), die auf wenigstens einer Platine (13a) angeordnet ist,
**dadurch gekennzeichnet, daß**
- der Maßstab (1) auf dem Untergrund mittels einer dicken - ausgleichenden Klebeschicht, insbesondere mit einer Dicke von 0,1 mm bis 1,0 mm, auf dem Untergrund aufgeklebt ist, und insbesondere
- der Maßstab (1) auf einer eigenstabilen Profilschiene (73), insbesondere in Form eines Strangpreßprofiles, aufgeklebt ist auf eine dortige Basisfläche (55), deren Breite nicht oder nur geringfügig ist als die Breite des Maßstabes (1), und insbesondere
- auf wenigstens einer Seite, insbesondere beidseits, der Basisfläche (55) eine Aufwölbung (56) vorhanden ist, deren Höhe größer ist als die Dicke des Maßstabes (1) einschließlich Klebeschicht, und insbesondere
- die Profilschiene (73) symmetrisch zur Längsmitte ausgebildet ist.

**16.** Längenmeßvorrichtung nach einem der vorhergehenden Ansprüche,
**dadurch gekennzeichnet,daß**
- oberhalb des oberen Endes der Aufwölbungen (56) beidseits jeweils ein Vorsprung (70) radial von außen gegen die Längsmitte weisend und endend außerhalb der Aufwölbungen (56) vorhanden ist zur Seitenführung des Kopfes einer Sensoreinheit (2), und insbesondere
- zwischen den Aufwölbungen (56) und den Vorsprüngen (70) jeweils eine, insbesondere tiefer als die Basisfläche (55) liegende, nach oben offene, insbesondere hinterschnittene Nut vorhanden ist, und/oder insbesondere
- die Profilschine (73) an ihrem seitlichen äußeren Ende, insbesondere außerhalb der Vorsprünge (70), eine nach oben weisende Schulter (71) sowie insbesondere dem gegenüber nach oben aufragende nach außen weisende Schulter (72) aufweist zum Ansetzen der Halteschenkel (74a) von Halteklammern (74), und insbesondere
- die Halteklammern (74) am Übergang zweier stirnseitig aneinandergrenzender Profilschienen (73) zur fluchtenden Ausrichtung der beiden Profilschienen gegeneinander dient.

**17.** Längenmeßvorrichtung nach einem der vorhergehenden Ansprüche,
**dadurch gekennzeichnet,daß** bei zwei stirnseitig aneinander grenzender Profilschienen (73) in die nach oben offenen Nuten (75) Paßstifte (76) eingesteckt sind, die mit ihren gegenüberliegenden Enden in den beiden aneinandergrenzenden Profilschienen (73) stecken.

**18.** Längenmeßvorrichtung nach einem der vorhergehenden Ansprüche,
**dadurch gekennzeichnet, daß**
- die Vorsprünge (70) gabelförmig ausgebildet sind und zwischen ihren gabelförmigen Enden eine Führungsnut (81) zum Führen eines Schlittens (82) aufweisen, und/oder insbesondere
- eine, insbesondere hinterschnittene, Führungsnut (81') zwischen der Aufwölbung (56) und dem Vorsprung (70) jeder Seite der Profilschiene (73) ausgebildet ist, und/oder insbesondere
- der Schlitten (82) aus einem miteinander verbundenen, insbesondere verschraubten Unterteil (82a) und einem Oberteil (82b) besteht, wobei das Unterteil (82a) in der Führungsnut (81, 81') formschlüssig und verschiebbar nur in Längsrichtung der Profilschiene (73) geführt ist, und insbesondere
- das Oberteil (82b) in geringem Abstand oberhalb der oberen Enden der Vorsprünge (70) mittels des Unterteiles (82a) gehalten ist und insbesondere seitlich über die Vorsprünge (70) vorsteht.
